(19) Europäisches Patentamt / European Patent Office / Office européen des brevets

(11) **EP 4 060 552 B1**

(12) **EUROPEAN PATENT SPECIFICATION**

(45) Date of publication and mention
of the grant of the patent:
**26.02.2025   Bulletin 2025/09**

(21) Application number: **21162619.7**

(22) Date of filing: **15.03.2021**

(51) International Patent Classification (IPC):
***G06F 18/2413*** (2023.01)      ***G06V 20/69*** (2022.01)
***G01N 15/14*** (2024.01)

(52) Cooperative Patent Classification (CPC):
**G06V 20/698; G01N 15/0227; G01N 15/1429;
G01N 15/1433; G06F 18/24147;** G01N 2015/0294;
G01N 2015/1006; G01N 2015/1486;
G01N 2015/1493; G01N 2015/1497; G06V 2201/03

(54) **LABEL-FREE ANALYSIS OF BRIGHTFIELD MICROSCOPE IMAGES**

MARKIERUNGSFREIE ANALYSE VON HELLFELDMIKROSKOPBILDERN

ANALYSE SANS ÉTIQUETTE D'IMAGES MICROSCOPIQUES EN FOND CLAIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.09.2022   Bulletin 2022/38**

(73) Proprietor: **Universiteit Antwerpen
2000 Antwerpen (BE)**

(72) Inventors:
  • **CARDENAS, Edgar
    2020 Antwerpen (BE)**

  • **DEBEN, Christophe
    2020 Antwerpen (BE)**
  • **LIN, Abraham
    2020 Antwerpen (BE)**

(74) Representative: **De Clercq & Partners
Edgard Gevaertdreef 10a
9830 Sint-Martens-Latem (BE)**

(56) References cited:
  **WO-A1-2019/122388      US-A1- 2019 178 867
  US-A1- 2020 363 402**

## Description

### Field of the invention

The present invention is in the field of Brightfield microscopy.

### Background to the invention

Patient-derived cellular objects, in particular patient derived tumour organoids (PDOs) are considered patients-in-the-lab, since the patient's tumour can be grown with high efficiency. An increasing amount of evidence suggest that these PDOs can predict therapy response in the patient following *in vitro* drug screening.

Document US 2019/178867 A1 (LUENGO HENDRIKS CRIS L [US] ET AL) 13 June 2019 (2019-06-13) discloses image analysis methods for the evaluation of tissue objects within a tissue sample without directly staining for those tissue objects.

The current gold-standard assay is based on the measurement of intracellular ATP levels as an endpoint assay using the CellTiter-Glo 3D assay (Promega). This assay can be affected by the luminescent labelling, is limited to one time-point, and cannot distinguish cytostatic (*i.e.* growth arrest) from a cytotoxic (*i.e.* cell death) response. The methods described herein overcome the problems of the art.

### Summary of the invention

Provided is a training method (100) as defined in claim 1.

The one or more c-objects in training sample (102) may have been labelled with a live cell fluorescence label (L) and the training c-object data (124) may comprise the training fluorescent image (114, 114') of the live cell fluorescence labelled (L) c-objects acquired during the acquisition event (110)

The one or more c-objects in the training sample (102) may have been labelled with a live cell fluorescence label (L) and at least one morphological fluorescence label (M), and

- training c-object data (124) comprises:

  - a training fluorescent image (114A) of the live cell fluorescence labelled (L) c-objects, acquired during the acquisition event (110)
  - c-object parameter labels (114B', 114C' 114D') generated from a training fluorescent image (114B, 114C, 114D) of the morphological fluorescence labelled (M) c-objects, acquired during the acquisition event (110)

Further provided is a processing method (200) for highlighting one or more cellular objects, c-objects, in a test Brightfield, BF, image (212), comprising:

- receiving test image data (220) containing the test BF image (212, 212') of a test sample (202) containing the one or more c-objects acquired during an acquisition event (210) by a test microscope (204) in BF acquisition mode;
- using the test image data (220) as an input to a trained predictive model, PM (240), trained according to the training method as described herein;
- outputting a trained PM output (250) from the trained PM (240), comprising a primary output image (252) in which c-objects of the test image (212) are highlighted.

Further provided is a processing method (200) for highlighting one or more cellular objects, c-objects, and providing an indication of a c-object state in a test Brightfield, BF, image (212), comprising:

- receiving a test image data (220) containing the test BF image (212, 212') of a test sample (202) acquired during an acquisition event (210) by a test microscope (204) in BF acquisition mode;
- using the test image data (220) as an input to a trained predictive model (PM) (240), trained according to the training method as described herein,
- outputting a trained PM output (250) comprising a primary output image (252) in which c-objects of the test image (212) are highlighted, and one or more c-object parameter channels (256) indicative of the c-object state.

Further provided is a (label-free) method for determining one or more characterising parameters (270) of one or more cellular objects, c-objects, in test sample (202), comprising:

- carrying out the method as described herein on the test sample (202)
- from the primary output image (252), determining the one or more characterising parameters (270) that are primary characterising parameters (272) including one or more of: c-object count, c-object location, c-object orientation, c-object shape, area of an individual c-object, mean area of a c-object, total area of all c-objects, intensity of an individual c-object, mean intensity of a c-object, and total c-object intensity all c-objects.

Further provided is a (label-free) method for determining one or more characterising parameters (270) of one or more cellular objects, c-objects, in test sample (202), comprising:

- carrying out the method described herein on the test sample (202);
- from the one or more c-object parameter channels (256), determining the one or more characterising parameters (270) that are specific characterising parameters (274) including c-object state.

Further provided is an assay (label-free) for determining viability of a population of one or more c-objects that are single cells and/or assemblies of cells in a test sample (202), comprising:

- receiving at least one test BF image (212) of the test sample (202) acquired by a test microscope (204) having at least a Brightfield acquisition mode,
- processing the at least one test BF image (212) according to a processing method (200) described herein to obtain a primary output image (252), and
- determining the viability from the count or total or mean area of highlighted c-objects in the primary output image (252).

Further provided is an assay for determining growth of viable c-objects of a population of one or more c-objects that are assemblies of cells in a test sample (202), comprising:

- receiving, at multiple time points, at least one test BF image (212) and at least one test fluorescence image (214, 214') of the test sample (202) captured in an acquisition event by a test microscope (204) having at least a Brightfield acquisition mode and a fluorescence imaging mode, wherein the test sample (202) has been contacted with a morphological fluorescent label for cell death;
- processing the at least one test BF images (212) according to a processing method (200) described herein to obtain the primary output image (252),
- determining from the primary output image (252) a total or mean area of highlighted c-objects at each time point;
- determining from the test fluorescence image (214, 214') a total area or mean area or individual area of c-objects occupied by the fluorescence at each time point;
- determining growth of viable c-objects from a total area or mean area or individual area of the highlighted c-objects in the primary output image (252) minus a total or mean area of highlighted c-objects emitted by the c-objects in the test fluorescence image (214, 214') as a function of time.

Further provided is an assay (label-free) for determining velocity of c-objects of a population of one or more c-objects that are single cells and/or assemblies of cells in a test sample (202), comprising:

- receiving, at multiple time points, at least one test BF image (212) of the test sample (202) each acquired by a test microscope (204) having at least a Brightfield acquisition mode,
- processing the at least one test BF images (212) according to a processing method (200) described herein to obtain the primary output image (252) at the multiple time points,
- tracking over the multiple time points movement of highlighted c-objects (254) in the primary output images (252); and
- determining from the distance (and direction) moved by the highlighted c-objects (254) over time, the velocity of the c-objects in the test sample (202).

Further provided is an assay (label-free) for determining fusion of c-objects of a population of one or more c-objects that are single cells and/or assemblies of cells in a test sample (202), comprising:

- receiving, at multiple time points, at least one test BF image (212) of the test sample (202) each acquired by a test microscope (204) having at least a Brightfield acquisition mode,
- processing the at least one test BF images (212) according to a processing method (200) described herein to obtain the primary output image (252) at the multiple time points,
- tracking over the multiple time points movement of highlighted c-objects (254) in the primary output images (252); and
- determining from the movement paths of the highlighted c-objects (254) over time, the fusion of c-objects in the test sample (202).

Further provided is an assay (label-free) for determining splitting of c-objects of a population of one or more c-objects that are single cells and/or assemblies of cells in a test sample (202), comprising:

- receiving, at multiple time points, at least one test BF image (212) of the test sample (202) each acquired by a test microscope (204) having at least a Brightfield acquisition mode,
- processing the at least one test BF images (212) according to a processing method (200) described herein to obtain the primary output image (252) at the multiple time points,
- tracking over the multiple time points movement of highlighted c-objects (254) in the primary output images (252); and
- determining from the movement paths of the highlighted c-objects (254) over time, the splitting of c-objects in the test sample (202).

Further provided is a screening method (label-free) for determining an effect of one or more potential active agents on a test sample (202) containing a population of one or more c-objects that are single cells and/or assemblies of cells comprising:

- carrying out an assay described herein on a plurality of test samples (202), wherein at least one of the test samples (202) contains the c-objects and is absent of potential active agent, and at least one of the test samples contains the c-objects and the one or more potential active agents;
- determining, by comparing the assays of the different test samples (202), an effect of the one or more potential active agent.

Further provided is a screening method (label-free) for determining a resistance to a therapeutic effect of one or more potential active agents on a test sample (202) containing a population of one or more c-objects that are assemblies of cells comprising:

- carrying out a growth assay described herein on a plurality of test samples (202), wherein at least one of the test samples contains the c-objects and the one or more potential active agents;
- identifying from the assay, resistant c-objects in the test sample (202), wherein a resistant c-object has a different individual growth compared with a mean growth of the test sample.

**Figure Legends**

FIG. 1 is a schematic of an exemplary scheme for a predictive model training method, wherein the training sample is labelled with one fluorescent label.
FIG. 2 is a schematic of an exemplary scheme for a predictive model training method, wherein the training sample is labelled with two or more fluorescent labels.
FIG. 3 is a schematic of an exemplary scheme for a processing method, wherein the training sample was labelled with one fluorescent label, and the test sample is label free.
FIG. 4 is a schematic of an exemplary scheme for a processing method, wherein the training sample was labelled with two or more fluorescent labels and the test sample is label free.
FIG. 5 is a schematic of an exemplary scheme for a processing method, wherein the training sample was labelled with one fluorescent label, and the test sample is fluorescently labelled.
FIG. 6 is a schematic of an exemplary scheme for a processing method, wherein the training sample was labelled with two or more fluorescent label, and the test sample is fluorescently labelled.
FIG. 7 shows a block schematic of an exemplary convolution network of 4 standard blocks.
FIG. 8 shows an exemplary standard block having plurality of pairwise convolution layers and activation functions that feed into a final block.
FIGs. 9A to C Plot showing pairwise comparison of organoid (A) Counts, (B) Mean c-object Area and (C) Total c-object Area detected by Brightfield- and Hoechst-based analysis of NSCLC_013T and NSCLC_006N PDO lines plated as a serial dilution of single cells and 3-day old organoids.
FIGs. 10 A to C Plot showing pairwise comparison of organoid (A) Counts, (B) Mean c-object Area and (C) Total c-object Area detected by Brightfield- and Hoechst-based analysis of NSCLC_051T, NSCLC_051N, co-culture NSCLC_051T/N and NSCLC_050N lines plated as 2-day old organoids and treated with a 10-point titration of cisplatin (1 - 100 $\mu$M).

**FIGs. 11 A to C** Plot showing Pairwise comparison of organoid (A) Counts, (B) Mean c-object Area and (C) Total c-object Area with the luminescent read-out (counts/s) of the CellTiter-Glo 3D assay for the NSCLC_051T, NSCLC_051N, coculture NSCLC_051T/N and NSCLC_050N PDO lines treated with a 10-point titration of cisplatin.

**FIGs. 12A to G:** Plot showing IC50 values for NSCLC_013T treated with a 7-point titration of (A) cisplatin, (B) carboplatin, (C) gemcitabine, (D) erlotinib, (E) gefitinib, (F) osimertinib or (G) afatinib normalized to vehicle (100%) and baseline (0%, 1 μM staurosporine).

**FIG. 13A** Plot showing Real-time monitoring of therapy-induced cell death of NSCLC_051T PDOs treated with a 10-point titration of cisplatin. Total fluorescence area / Total c-object Area was normalized to baseline (0%, vehicle at t = 0h) and positive (100%, 100 μM cisplatin at t = 72h) controls.

**FIG. 13B** Plot showing Real-time monitoring of organoid growth (Total c-object Area - Total fluorescence Area) and cell death (Total fluorescence Area / Total c-object Area) as run quality control.

**FIG. 13C** Plot showing Total fluorescence Intensity / Total c-object Area of the Caspase 3/7 green reagent in NSCLC_046T PDOs treated with cisplatin +/- Z-VAD-FMK (pan-caspase inhibitor).

**FIG. 14A** Plot showing Dose-response curves for NSCLC_051T, NSCLC_051N and co-cultureNSCLC_051N/T treated with a 10-point titration of cisplatin and normalized to vehicle (100%) control.

**FIG. 14B & C** Plot showing Real-time monitoring of (B) cell viability and (C) percentage survival of NSCLC_051T PDOs treated with a 10-point titration of cisplatin.

**FIG. 15A to B:** Pairwise comparison of (A) Total Green Intensity and (B) Total Green Area (Cytotox Green reagent) normalized to Total BF Area with the luminescent read-out (counts/s) of the CellTiter-Glo 3D assay for the NSCLC_051T, NSCLC_051 N, co-culture NSCLC_051T/N and NSCLC_050N PDO lines treated with a 10-point titration of cisplatin.

**FIG. 16A to C** (A) Inhibitory (% survival, normalized to vehicle (100%) and baseline control (0%, 100 μM cisplatin) and stimulatory (% cell death, normalized to vehicle (0%) and positive control (100% , 100 μM cisplatin) dose-response curves, and the corresponding (A) IC50 and (B) EC50 values for NSCLC_051T PDOs treated with a 10-point titration of cisplatin.

**FIG. 17** Inhibitory (% survival, normalized to vehicle (100%) and baseline control (0%,1 μM staurosporine) and stimulatory (% cell death, normalized to vehicle (0%) and positive control (100% , 1 μM staurosporine) dose-response curves NSCLC_013T PDOs treated with a 7-point titration of gefitinib.

**FIG. 18A** and **B:** Brightfield image (**A**) inputted into a processing method described herein and an outputted primary output image (**B**)

**FIG. 19A** and **B** Dose response curve (**A**) and corresponding IC50-value (**B**) for NSCLC_051T, treated with a 10-point titration of cisplatin and normalized to vehicle (100%) control.

**FIG. 20** Shows example of training data set images (**A1-2** to **F1-2**) and probability map image outputs of the predictive model for training samples A to F (**A3** to **F3**).

## Detailed description of invention

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.*, any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

It is to be understood that other embodiments may be utilised and structural or logical changes may be made without departing from the scope of the present invention. The following detailed description, therefore, is not to be taken in a limiting sense, and the scope of the present invention is defined by the appended claims.

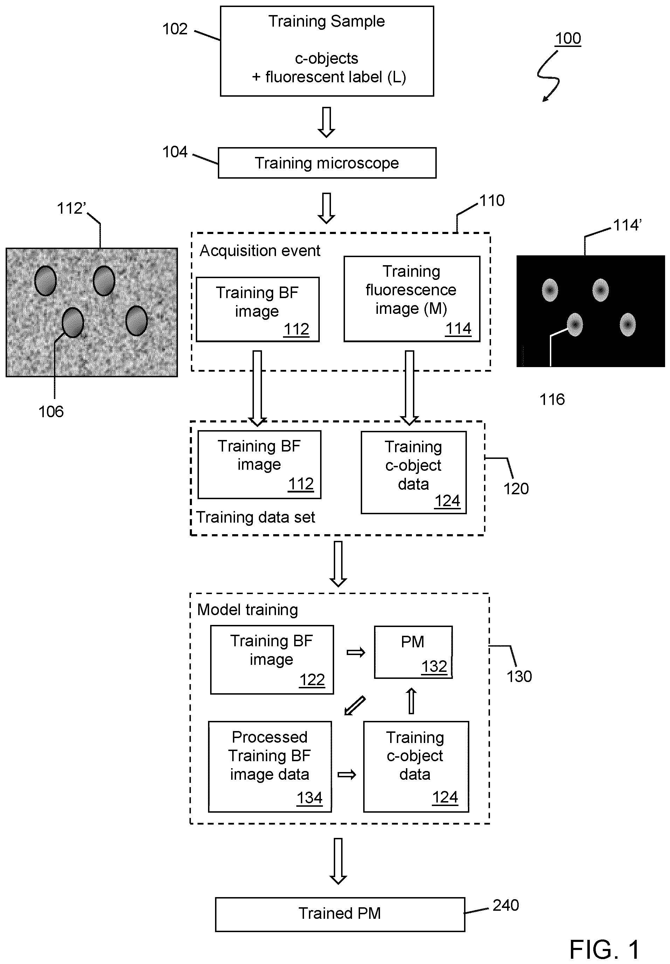

Provided herein is a method (100) for training a predictive model (PM). An example of a training method (100) is shown in **FIG. 1.** The trained PM (240) is for highlighting cellular objects (c-objects) in a test Brightfield (BF) image of a test sample of c-objects acquired using a microscope having at least a BF acquisition mode.

Training method (100) comprises receiving a plurality of training data sets (120). Each training data set (110) is captured from a training sample (102). Each training data set (110) comprises a training Brightfield (BF) image (112, 112') of the training sample (102) and training c-object data (124) of the training sample (102). The training sample (102) comprises one or more c-objects that have been labelled with one or more fluorescent labels. Both the training BF image (112, 112') and training c-object data (124) are obtained from an acquisition event (110) of a training microscope (104). An acquisition event (110) is a capture by the training microscope (104) of a plurality of images simultaneously or near-simultaneously such the position and orientation of the one or more c-objects in both images is the same. One image of the plurality is the training BF image (112, 112'), and another other image of the plurality is a training fluorescent image (114). Any further training fluorescent images (114) captured during the acquisition event (110) constitute further images in the plurality. The training c-object data (124) is generated automatically from one or more training fluorescent images (114, 114') captured during the acquisition event (110).

At least one of the fluorescent labels in the training sample (102) may be a live cell fluorescent label that highlights only c-objects (all types, or specific types) and in any state.

During training (130) of the PM, an input to the PM (132) is the training BF image (122) of the data training set (120), and an output to the PM is processed training BF image data (134). During training, the processed training BF image data (134) is compared with the training c-object data (124) of the training data set (120). The PM (132) is adjusted so that the outputted processed training BF image data (134) approaches the training c-object data (124) of the training set (120).The processed training BF image data (134) output of the predictive model (134) may comprise a probability map image.

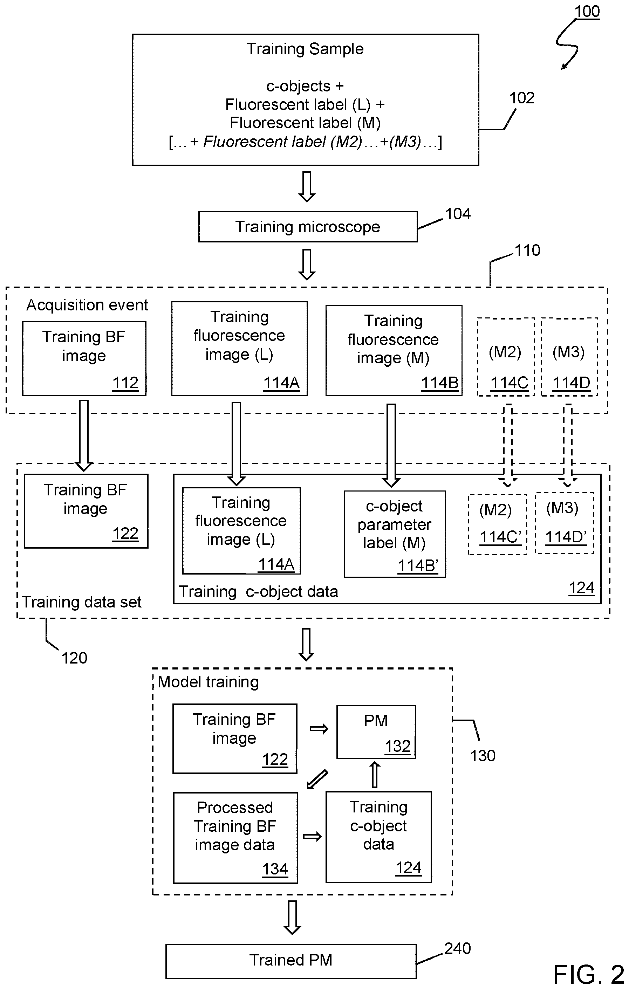

The c-object data (124) may comprise the training fluorescent image (114, 114'); the processed training BF image data (134) will during training, approach the training fluorescent image (114, 114'). In other words, the fluorescent image (114, 114') is ground truth. The c-object data (124) may comprise the training fluorescent image (114, 114') and one or more c-object parameter labels (114B', 114BC', 114D'); the processed training BF image data (134) will during training, approach the training fluorescent image (114, 114') and one or more c-object parameter labels (114B', 114BC', 114D') - this is described in more detail elsewhere herein (*e.g.* see **FIG. 2**).

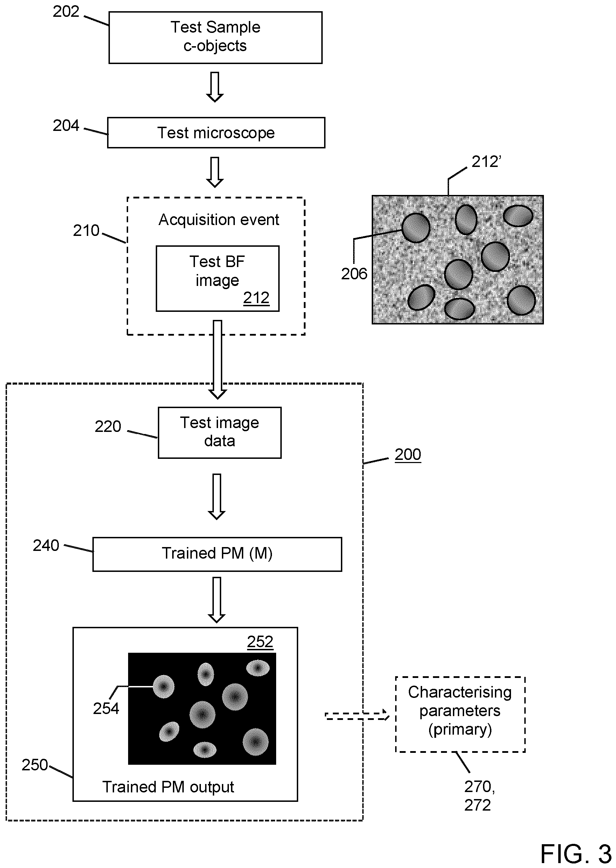

By "highlights" or "highlighting" of a c-object, it is meant that a c-object (206) in the Brightfield image (206) becomes a "fluorescently stained" c-object (254) in the primary output image (252) by application of the processing method (200). One or more properties of the c-object (254) in the primary output image (252) (e.g. intensity, area, shape, size) correspond to the properties of same c-object (206) in the Brightfield image (206) as if it had been fluorescently stained by a fluorescent label and fluorescently imaged. With highlighting, only c-objects are visible; artefacts such as debris, fibres, air bubbles, dust are not highlighted. Highlighting may include setting the background to a monotone, such as black, or white, or another colour. Highlighting may typically include replacing the original regions of the training or test BF image (112', 212') indicating c-objects (106, 206) with regions of similar relative size, shape and orientation; the shading of each c-object may be different compared with the BF image (112', 212') attributable to the shading present in the training fluorescent images (114, 114') and is caused by the fluorescent label. The shading of the c-object may be indicative of fluorescent intensity. As shown in **FIG. 1,** for instance, the c-objects (106) in the training BF image (112') are replaced by highlighted c-objects (116) in the training fluorescent image (114'). As shown in **FIG. 3,** for instance, the c-objects (206) in the test BF image (212') are replaced by highlighted c-objects (254) in the primary output image (252) of the trained PM output (250).

It is appreciated that, for the purposes of training, the training Brightfield image (112, 112') might be an unprocessed image, or might be processed in a number of ways standard in the art, for instance it may be randomly resized to different scales, and/or cropped into section *e.g.* 128 pixel by 128 pixel sections, and/or introduced to noise *via* a gaussian blur or salt/pepper noise, and/or randomly flipped and rotated.

A principal advantage of the training method (100) is that the training c-object data (124) is automatically generated from the one or more training fluorescence images (114). The requirement for user intervention is minimised. Previously, c-objects had to be identified manually based on the image, or using additional segmentation software to separate objects from the background based on the image. In the case of Brightfield microscopy, artefacts present in the image such as debris, air bubbles and shadows giving rise to error in both manual and traditional automatic methods. By using a fluorescent label that highlights only c-objects, an image of highlighted c-objects is empirically obtained automatically thereby reducing processing time for production of the training data. Reduction in processing times is important because a typical BF image of a sample c-objects may contain hundreds to thousands of c-objects.

Further, by using a training microscope (104) capable of capturing both BF and fluorescence images in a single acquisition event, the training BF image (112) is identical to the training fluorescent image (114), hence the training fluorescent image (114) is a superior ground truth, leading to more accurately trained PM (240). Further, the fluorescent greyscale image of a c-object provides different and more simplified information compared with the Brightfield image of a c-object, which simplifies the training and test output, reducing processing times. Further, the simplified training and test output provides a simplified representation of a c-object that reduces any further processing steps.

The term "test" as used for instance in "test sample", "test image", "test image data", "test microscope" refers to the sample, images, data and microscope of a sample under investigation whose image is to be processed. The test sample contains one or more c-objects that are to be characterised. The test sample is a culture. The test sample may be a co-culture.

The term "training" as used for instance in "training sample", "training image", "training image data", "training microscope" refers to the sample, images, data and microscope of a sample used in the training data set. The training sample is a culture. The training sample may be a co-culture.

The sample (test and training) contains one or more, preferably a plurality of cellular objects (c-objects). The sample is a cell culture. The sample may be a co-culture. The one or more c-objects may be single cells or assemblies of cells such as organoids or spheroids. Samples containing a culture of single cells is sometimes call a 2D cell culture. Samples containing a culture of organoids or spheroids is sometimes called a 3D cell culture. A sample that is a culture may contain tens, hundreds to thousands of c-objects that are single cells. A sample that is a culture may contain 1 to hundreds of c-objects that assemblies of cells such as organoids or spheroids. The sample (test and training) may contain the same class of c-objects (e.g. all organoids, or all single cells). The sample (test and training) may contain a mixture of different c-objects classes (e.g. organoids and single cells).

The sample may be a mono-culture of c-objects of the same type (e.g. all organoids/spheroids). The sample may be a co-culture of c-objects of two or more different types (e.g. organoids together with fibroblasts, or with immune cells or with endothelial cells).

A c-object may be of a certain type (known as "type" herein) that can be detected by a fluorescence label (see later below). A non-exhaustive types include patient-derived organoids, cancer cells (single or assemblies of), cancer-associated fibroblasts, immune cells, endothelial cells.

A c-object may have a certain state (known as "state" herein) that can be detected by a fluorescence label (see later below). A non-exhaustive list of states include dead, apoptotic, senescent, undergoing Epithelial to mesenchymal transition (EMT). Detection of the c-object state by the processing method described herein is preferably for a single-cell c-object, however, assemblies of cells such as organoids or spheroids are not excluded.

The one or more c-objects may be fluorescently labelled with any fluorescent label that allows the targeted c-object to be fluorescently imaged. As different fluorescent labels have different properties, the PM can be trained according to the described training method to identify the same property from the Brightfield image alone. The fluorescent labels may be classified into different subgroups: live cell fluorescent labels and morphological fluorescent labels.

The one or more c-objects may be fluorescently labelled with a live cell fluorescent label that highlights only c-objects, all of them, and in any state. It is a universal label. It allows the shape of the c-object to be fluorescently imaged. Debris is not labelled and non-cellular objects are not labelled. A live cell fluorescent label may be denoted Fluorescent label (L). The live cell fluorescent label may be used to generate a primary output image (252) (described later below). Examples of live cell fluorescent labels include nucleic acid dyes including the Hoechst series of fluorescent dyes (*e.g.* Hoechst 33258 (blue), 34580 (red), 33342 (green)), Nuclight Red (Sartorius), Nuclight Green (Sartorius), Cytolight Green (Sartorius), Cytolight Red (Sartorius). C-objects of a different type (e.g. organoids/spheroids, fibroblasts, immunity cells, cancer cells) in the same sample may be distinguished by using non-overlapping fluorescent labels (*e.g.* red and green) for each type; these may be labelled with distinct live cell fluorescent labels prior to combining the different types of c-objects in the same sample.

The one or more c-objects may be fluorescently labelled with a morphological fluorescent label that highlights only c-objects in a certain state (*e.g.* dead, apoptotic, senescent, undergoing Epithelial to mesenchymal transition (EMT)) characterized by a distinct morphology. It allows the shape of the c-object to be fluorescently imaged. The morphological fluorescent label may be used to generate a c-object parameter label (114B') (described later below). Examples of morphological fluorescent labels include marker for cell death (*e.g.* Cytotox green/red, CellTox green), marker for cell apoptosis (e.g. Caspase 3/7 green), marker for cellular senescence (*e.g.* measure B-galactosidase activity, *e.g.* CellEvent™ Senescence Green Flow Cytometry Assay Kit ThermoFisher), marker for Epithelial to mesenchymal transition (EMT) (BioTracker™ TiY Vimentin Live Cell Dye Merck). One c-object state may be accompanied by a difference in morphology compared to other states.

Where two or more fluorescent labels are used, each fluorescent label is distinct. By distinct it is meant that the excitation spectrum and/or emission spectrum is different in each fluorescent label. It allows each label to be imaged separately from the others by changing the excitation wavelength and/or the detection wavelength.

The live cell fluorescent label (L) in the training sample may be used to generate the primary output image (252) (channel 1) described elsewhere herein. The morphological fluorescent label (M) may be used to generate the c-object parameter channel (256) (channel 2) described elsewhere herein.

Where two or more distinct fluorescent labels are used in the training sample, one may be a live cell fluorescent label (generating the primary output image (252) (channel 1)) and the other may be a morphological fluorescent label (generating the c-object parameter channel (256) (channel 2)).

It is appreciated that one, two, or more distinct live cell fluorescent labels in the training sample may be used to generate a primary output image (252) that can distinguish between different cell types. The each distinct live cell fluorescent label may be applied to the same cell type. For instance organoids/spheroids may be labelled with a stable live cell fluorescent label (*e.g.* NucLight Red), and fibroblasts may be added to the training sample that have been labelled with a transient live cell fluorescent label.

The fluorescent label may be an additive that is added to the c-object, and contact of the additive with a c-object causes binding and fluorescent labelling of the c-object; this may be called a transient fluorescent label. Examples include the Hoechst series of fluorescent dyes. The fluorescent label may be introduced into the c-object by cloning of a gene (*e.g.* viral transduction) that expresses a fluorescent label or that expresses a tag that reacts with one or more other substances to produce fluorescence; this may be called a stable fluorescent label. Examples include NucLight/Cytolight Red/Green Lentivirus Reagent (Sartorius).

The microscope (test and training) has at least a Brightfield (BF) imaging mode, for acquisition of a Brightfield image of the sample. The image may be a static image, or a part of a moving image (real-time acquisition). The training microscope and optionally the test microscope also has a fluorescence imaging mode for acquisition of a fluorescence image of the sample. Where both BF imaging mode and fluorescence imaging mode are present, the microscope is configured to capture both image types in an acquisition event. An acquisition event is a capture by the microscope of a plurality of images simultaneously or near-simultaneously such the position and orientation of c-objects in both images is the same. Typically, the delay between separate captures is in an order of tens of milliseconds. The fluorescence imaging mode may operate at a plurality of different wavelengths or channels, in order to capture selectively different fluorescent images at different emission wavelength bands (*e.g.* blue, green and red). The microscope may be configured to capture a Brightfield image, and a first fluorescent image at a first excitation and/or emission wavelength band, and an optional second fluorescent image at a second excitation and/or emission wavelength band, and optional further fluorescent images at a further excitation and/or emission wavelength bands in an acquisition event.

The training microscope and/or the test microscope may further have a luminescence measurement mode for measurement of luminescence of the sample. Where Brightfield imaging and luminescence measurement and optionally fluorescence imaging are present, the microscope is configured to capture the BF image and luminescence and optional fluorescence image in an acquisition event.

The training microscope is used for capture of images used for training of the PM. The test microscope is used for capture of images used for the imaging processing method or method for characterising cellular objects (c-objects). The training microscope and the test microscope may be the same or different. Example of a suitable microscope includes the Tecan Spark Cyto.

A further exemplary method (100) for training the PM is shown schematically in **FIG. 2,** involving 2 or more distinct fluorescent labels, one of which is used to generate c-object parameter labels. The PM is trained using a plurality of training data sets (110). Each training data set (110) is captured from a training sample (102). Each training data set (110) comprises a training Brightfield (BF) image (112, 112') of the training sample (102) and training c-object data (124) of the training sample (102). The training sample (102) comprises one or more c-objects that have been labelled with two or more distinct fluorescent labels (*e.g.* L and M, optionally also M1 and M2). Both the training BF image (112) and training c-object data (124) are obtained from an acquisition event (110) of the training microscope (104). An acquisition event (110) as mentioned earlier is a capture by the training microscope (104) of a plurality of images simultaneously or near-simultaneously such the position and orientation of c-objects in both images is the same. One image of the plurality is the training BF image (112), another image of the plurality is a training fluorescent image having absorption/emission profile L (114A) (attributed to Fluorescent label L), and another image of the plurality is a training fluorescent image having absorption/emission profile M (114B) (attributed to Fluorescent label M). Further training fluorescent images (*e.g.* 114C, 114D) (attributed to *e.g.* Fluorescent labels M2 and M3) may be captured during the acquisition event (110). The training c-object data (124) is determined from two or more training fluorescent images (114A, 114B, 114C, 114D) captured during the acquisition event.

At least one of the fluorescent labels (*e.g.* L) in the training sample (102) may be a live cell fluorescent label that highlights only c-objects, all of them, and in any state. The live cell fluorescent label is used in the training fluorescence image (L) (114A) of the training c-object data (124). Examples of live cell fluorescent labels are listed elsewhere herein.

At least one of the fluorescent labels (*e.g.* M (=M1), M2, M3) in the training sample (102) may be a morphological fluorescent label may be that highlights only cells in a certain state; this fluorescent label is used to automatically generate a c-object parameter label (114B', 114C', 114D') for each c-object. The c-object parameter label (114B', 114C', 114D') corresponds to the function of the morphological fluorescent label (e.g. dead, apoptotic, senescent, undergoing Epithelial to mesenchymal transition (EMT)).

In a preferred combination, at least one fluorescent label is a morphological fluorescent label (generating the primary output image (252) (channel 1)) and the other is a fluorescent label (generating the c-object parameter channel (256) (channel 2)).

The change in morphology (shape) caused by the state of the cell may be detected in the training fluorescence image (L) (114A), and the morphological fluorescent label - indicative of that cell state - allows automatic generation of a c-object parameter label (114B', 114C', 114D'). Hence, a specific c-object morphology is linked to a specific cell state, and the training data c-object parameters labels are automatically labelled from the training fluorescence image (M, M2, M3).

During training (130) of the PM, an input to the PM (132) is the training BF image (122) of the data training set (120), and an output to the PM is processed training BF image data (134). During training, the processed training BF image data (134) is compared with the training c-object data (124) of the training data set (120). The training c-object data (124) comprises the training fluorescent image (114A) and one or c-object parameter labels (114B', 114C', 114D'). The PM (132) is adjusted so that the outputted processed training BF image data (134) approaches the training c-object data (124) of the training set (120). The processed training BF image data (134) will during training, approach the training fluorescent image (114A) and the one or more c-object parameter labels (114B', 114C', 114D').

An input to the trained PM (240) is test image data (220) comprising a Brightfield image (212, 212') of a test sample (202). The c-objects do not need to be labelled with a live cell fluorescent label.

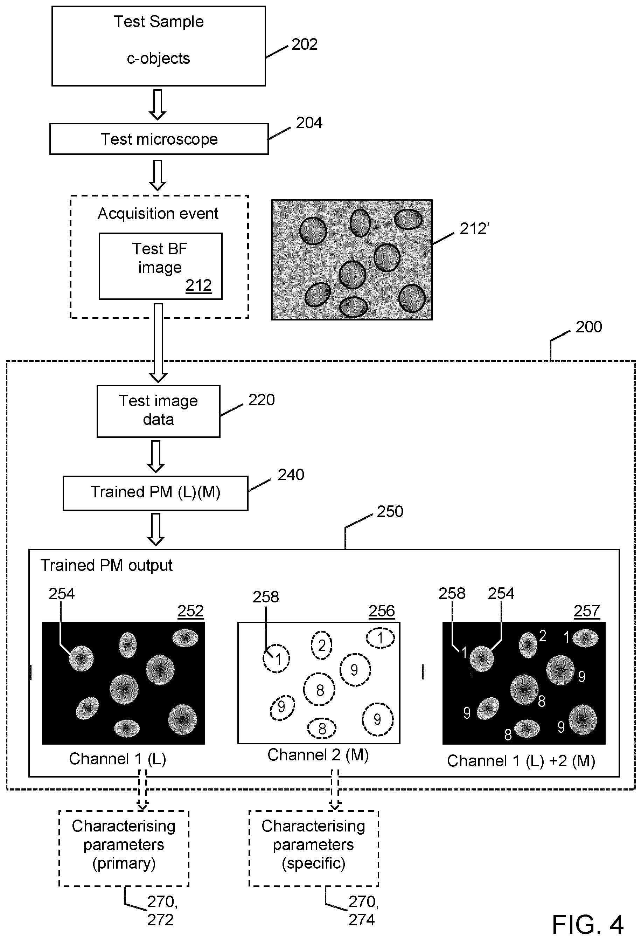

The trained PM output (250) may comprise a primary output image (252) corresponding to the test image (212, 212') in which the c-objects (254) have been highlighted. The primary output image (252) is generated as a result of training the PM using training samples (102) in which the c-objects have been labelled with the live cell fluorescent label. It is appreciated that trained PM that has been trained using samples (102) in which the c-objects have been labelled with both a live cell fluorescent label and a morphological fluorescent label will still produce a primary output image (252). The primary output image (252) may be outputted in a 1st channel (channel 1). An example of the primary output image (252) is shown in **FIGs. 3** and **4.**

The trained PM output (250) may further comprise one or more c-object parameter channels (256). These may be termed channel 2, channel 3, etc. In a c-object parameter channel (256), a c-object parameter label (256) or probability that the c-object parameter label (256) is true may be marked in a location corresponding to that c-object in the primary output image (252), or in an equivalent way. The c-object parameter channels (256) are generated as a result of training the PM using training samples (102) in which the c-objects have been labelled with the morphological fluorescent label in addition to the live cell fluorescent label. An example of a c-object parameter channel (256) is shown in **FIG. 4.**

The c-object data (124) may comprise a parameterised representation of the training fluorescent image (114, 114'). By parameterised representation it is meant that the training fluorescent image (114, 114') is pre-processed into a set of representational parameters defining the c-objects in the training fluorescent image. Accordingly, representational parameters replace the training fluorescent image (114, 114'). Examples of representational parameters include number of c-objects, size of each c-object, orientation of each c-object, shape of each c-object, intensity of each c-object). The processed training BF image data (134) will during training (130), approach the parameterised representation of the training fluorescent image (114, 114').

The training c-object data (124) is automatically generated from each training fluorescence image (114, 114', 114A, 114B, 114C, 114D).

For instance, where the training c-object data (124) contains the training fluorescence image (114, 114', 114A) (*e.g.* FIGs. 1 and 2), the training fluorescence image (114, 114', 114A) is automatically generated during the acquisition event because the c-objects have been fluorescently labelled, usually with a live cell fluorescent label (L), in the training sample. A training sample containing one to tens to thousands of c-objects thus automatically generates c-object training data (124) that contains images of highlighted c-objects devoid of background, debris, fibres, artefacts, and air bubbles.

For instance, where the training c-object data (124) contains c-object parameter labels (114B', 114C', 114D') (*e.g.* **FIG. 2**), the c-object parameter labels may be automatically generated from the corresponding further training fluorescent image (114B, 114C, 114D) (usually with a morphological fluorescent label (M)) because it contains highlighted c-objects with background, debris, fibres, artefacts, and air bubbles filtered out by pre-processing. A numeric probability that the highlighted c-object is attributed to a function of morphological fluorescent label can be automatically generated for each highlighted c-object in the training fluorescent image (114B, 114C, 114D) based on parameters such as intensity. Thus a sample containing one to tens to thousands of c-objects thus automatically generates training data that is a probability for each c-object, devoid of interference from background, debris, fibres, artefacts, and air bubbles. Examples of protocols or software for automatic generation of the c-object parameter labels includes ImageJ, FIJI, Cell Profiler Analyst, Icy.

Further provided herein is a method for processing a test image. The processing method (200) is for highlighting one or more c-objects in the test image. The c-objects in the test image may be single cells or assemblies of cells (*e.g.* organoids, spheroids). An exemplary processing method is shown in **FIG. 3.** The processing method (200) comprises receiving test image data (220) containing the test BF image (212, 212') of a test sample (202) acquired during an acquisition event (210) by the test microscope (204) in BF acquisition mode. The test sample (202) contains cellular objects (c-objects) (206), and the Brightfield (BF) test image (212, 212') is obtained by a test microscope (204) having at least a BF acquisition mode. The c-objects in the test image (212, 212') do not need to be fluorescently labelled.

The processing method (200) comprises processing the test image data (220) using the trained predictive model (PM) (240) described herein. The trained predictive model (PM) (240) produces a trained PM output (250). The trained PM output (250) may comprise a primary output image (252) corresponding to the test image (212, 212') in which the c-objects (254) have been highlighted (channel 1).

A principal advantage of the processing method (200) is that c-objects are highlighted from a Brightfield image without the need for fluorescent labels. Live cell fluorescent labels (e.g. Hoechst - a DNA binder) affect the functioning of c-objects, and cannot be used to monitor subsequent growth or movement of c-objects. A typical sample may contain hundreds to thousands of c-objects; the label-free highlighting allows monitoring of growth and mobility of a population. The effect of one or more potential active agents on growth and/or mobility can also be determined without fluorescent labels.

The processing method (200) may be for highlighting one or more c-objects in the test image, in addition to an indication of a state of one or more c-objects. The one or more c-objects in the test image may be single cells or assemblies of cells (e.g. organoids, spheroids). Where the PM (240) has been trained with training c-object data (120) comprising both the training fluorescence image (114A) and c-object parameter labels (114B', 114C', 114D'), as shown, for instance, in **FIG. 2,** the trained PM output (250) may comprise a primary output image (252) and one or more c-object parameter channels (256) indicative of the c-object state. An example of such a processing method (200) is shown in **FIG. 4.** The indication of the state of c-objects include a probability of the c-object having certain state.

The processing method (200) comprises receiving test image data (220) containing a test BF image (212, 212') of a test sample (202) acquired during an acquisition event (210) the BF acquisition mode. The test sample (202) contains one or more cellular objects (c-objects) (206), wherein the test image (212, 212') is obtained by a test microscope (204) having at least a Brightfield (BF) acquisition mode. The c-objects in the test image (212, 212') do not need to be fluorescent labelled. The processing method (200) comprises processing the test image data (220) using the trained predictive model (PM) (240) described herein. The trained predictive model (PM) (240) produces a trained PM output (250). The trained PM output (250) may comprise a primary output image (252) corresponding to the test image (212, 212') in which the c-objects (254) have been highlighted (channel 1). The trained PM output (250) may further comprise a c-object parameter channel (256) (channel 2). The output image (252) obtained from the trained PM (240) was generated from the training fluorescence image (114A) in which c-objects are labelled with fluorescent label (L) - a live cell fluorescent label. The c-object parameter channel (256) obtained from the trained PM (240) was generated from the training fluorescence image (114B) in which c-objects were labelled with fluorescent label (M) - a morphological cell fluorescent label. A combination (257) of the primary output image (252) and the c-object parameter channel (256) may be generated.

A principal advantage of the processing method (200) is that the state of c-objects in the sample can be determined without the need for addition of a morphological fluorescent label in the test sample. A morphological fluorescent label might affect the functioning of c-objects. A typical sample may contain hundreds to thousands of c-objects; the label-free highlighting allows monitoring of the c-object state of a population. The effect of one or more potential active agents on c-object state can also be determined without fluorescent labels.

The processing methods (200) described herein may be applied at one or more time points to a test sample (202); typical applications include monitoring of c-object growth. The processing methods (200) may be applied at regular intervals such as hourly, or several time a day for one or several days. The processing method (200) may be applied in continuously (real-time) to a test sample (202) to obtain moving images; typical applications include monitoring of c-object mobility (e.g. velocity, merging events, splitting event).

The processing methods (200) described herein may be used for determining one or more characterising parameters (270) of the one or more c-objects in the test sample (202) **(FIGs. 3**, **4**). The test sample may be a culture. The test sample may be a co-culture. The c-objects may be cancer cells or cancer-related cells. The characterising parameters may be determined for each c-object in the test image, and/or for the population of c-objects in the test image. The characterising parameters (270) may be used in subsequent assays and screening methods. The characterising parameters (270) may be categorised into different sub-groups, for instance, primary characterising parameters (272), specific characterising parameters (274), and derivative characterising parameters.

Primary characterising parameters (272) may be determined from the primary output image (252) (FIGs. 3, 4, 5). These include but are not limited to: c-object count, c-object location, c-object orientation, c-object shape, area of an individual c-object, mean area of a c-object, total area of all c-objects in the primary output image (252), intensity of an individual c-object, mean intensity of a c-object, and total c-object intensity all c-objects in the primary output image (252). The Primary characterising parameters (272) can be determined from the primary output image (252) by standard image processing techniques such as connected component analysis and measuring region properties.

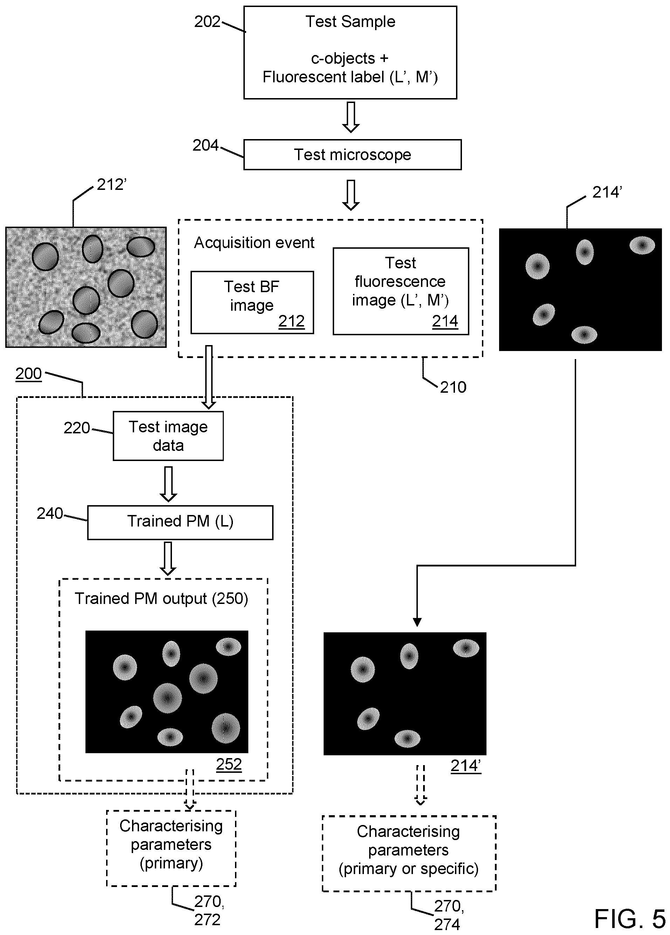

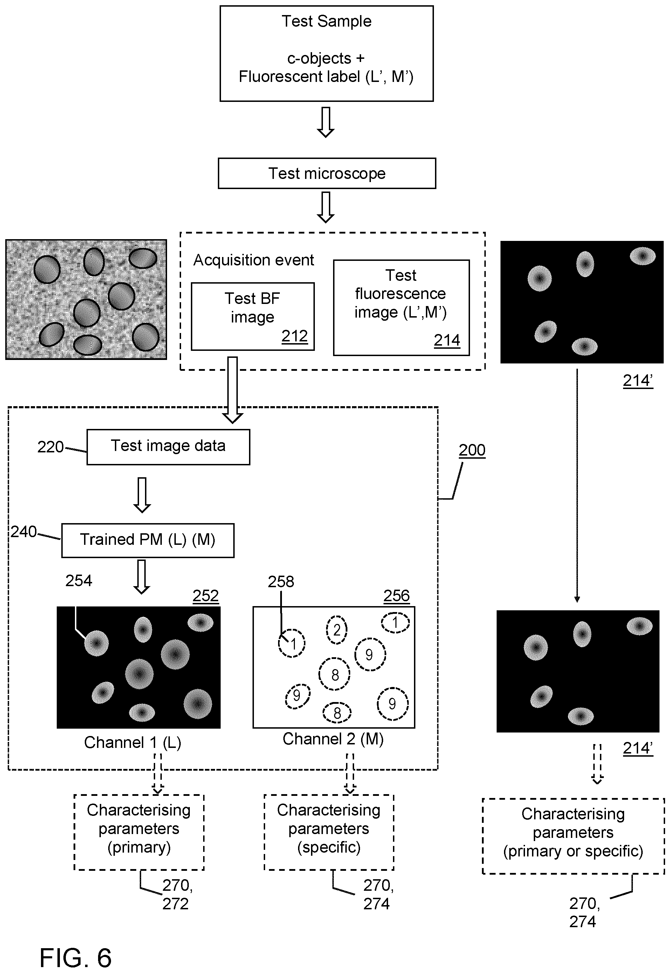

Specific characterising parameters (274) may be determined from the one or more c-object parameter channels (256) (FIG. 4) or from a fluorescent label added to the test sample (**FIGs. 5** and **6**). Specific characterising parameters (274) depend on the function of the morphological fluorescent label used during training of the PM or added to the test sample (202). Examples of specific characterising parameters include (*e.g.* detection of state: cell death (*e.g.* Cytotox green/red, CellTox green), cell apoptosis (*e.g.* Caspase 3/7 green), cellular senescence (*e.g.* measure B-galactosidase activity, *e.g.* CellEvent™ Senescence Green Flow Cytometry Assay Kit ThermoFisher), Epithelial to mesenchymal transition (EMT) (BioTracker™ TiY Vimentin Live Cell Dye Merck).

Provided is method for characterising cellular objects (c-objects) in a test sample (202) comprising a one or more (e.g. a plurality) of c-objects, the method comprising:

- receiving a test BF image (212) of the test sample (202) captured by test microscope (204) having at least a Brightfield acquisition mode,
- processing the test BF image (212) according to a processing method (200) described herein to obtain a primary output image (252) and optionally one or more c-object parameter channels (256);
- determining from the primary output image (252) and optionally the one or more c-object parameter channels (256), one or more characterising parameters (270) of the c-objects.

The one or more c-objects in the test sample do not need to be fluorescently labelled. To obtain the primary output image (252) as minimum from a non-fluorescently labelled test sample (202), the predictive model was trained using a training sample (102) where the c-objects were fluorescently labelled with a live cell fluorescent label (L) to produce a fluorescent training image (114) (**FIG. 1**). Characterising parameters obtained from the primary output image (252) include primary characterising parameters (272) (**FIG. 3**).

To obtain both the primary output image (252) and one or more c-object parameter channels (256) from a non-fluorescently labelled test sample (202), the predictive model was trained using a training sample (102) where the c-objects were labelled with a live cell fluorescent label (L) and a morphological fluorescent label (M) to produce two fluorescent training images (114A, 114B) (**FIG. 2**). Characterising parameters (270) obtained from the primary output image (252) include primary characterising parameters (272), and characterising parameters (270) obtained from the specific output image (256) include specific characterising parameters (274) (**FIG. 4**).

The test sample (202) may contain a mono-culture of c-objects (*e.g.* single cells, assemblies of cells). The test sample may contain a co-culture of c-objects (*e.g.* label-free patient-derived organoids and label-free cancer-associated fibroblasts (training sample (102) labelled with live cell fluorescent label (L) and training sample (102) labelled with a different live cell fluorescent label (L) to produce primary output image (252)).

Provided is method for characterising cellular objects (c-objects) in a test sample (202) comprising a one or more (*e.g.* a plurality of) c-objects, the method comprising:

- receiving a test BF image (212) and a test fluorescent image (214) of the test sample (202) captured by a test microscope (204) in an acquisition event,
- processing the test BF image (212) according to a processing method (200) described herein to obtain a primary output image (252) and optionally one or more c-object parameter channels (256);
- determining from the primary output image (252) and optionally the one or more c-object parameter channels (256), one or more characterising parameters (270) of the c-objects;
- determining from the test fluorescent image (214), one or more (additional) characterising parameters (270) of the c-objects.

The c-objects in the test sample are fluorescently labelled. The fluorescent label may be a live cell fluorescent label, or a morphological fluorescent label. To obtain the primary output image (252), the predictive model was trained using a training sample (102) where the c-objects were fluorescently labelled with a live cell fluorescent label (L) to produce a fluorescent training image (114) (**FIG. 1**). Characterising parameters obtained from the primary output image (252) include primary characterising parameters (272) (**FIG. 5**).

To obtain both the primary output image (252) and one or more c-object parameter channels (256), the predictive model was trained using a training sample (102) where the c-objects were labelled with a live cell fluorescent label (L) and a morphological fluorescent label (M) to produce two fluorescent training images (114A, 114B) **(FIG. 2)**. Characterising parameters (270) obtained from the primary output image (252) include primary characterising parameters (272), and characterising parameters (270) obtained from the specific output image (256) include specific characterising parameters (274) **(FIG. 6)**.

Additional characterising parameters (270) including primary (272) or specific (274) characterising parameters (270) - depending on the fluorescent label (M', S') in the test sample (202) - are determined from the test fluorescent image (214) **(FIGs. 5** and **6)**.

The test sample (202) may contain a mono-culture of c-objects (*e.g.* single cells, assemblies of cells). The test sample may contain a co-culture of c-objects (*e.g.* patient-derived organoids (training sample (102) labelled with live cell fluorescent label (L) to produce primary output image (252)) and cancer-associated fibroblasts labelled with a live cell fluorescent label (L)).

The one or more characterising parameters determined of the one or more c-objects in the test sample (102) may be applied in different assays, for instance, to determine viability, death, growth, viable growth, velocity, fusion, splitting of c-objects in the test sample. The test sample may be a culture. The c-objects may be cancer cells or cancer-related cells. As discussed later herein, one or more of the assays may be used in a screening method for a potential active agent. Exemplary assays are shown in **FIGs. 3** to **6**.

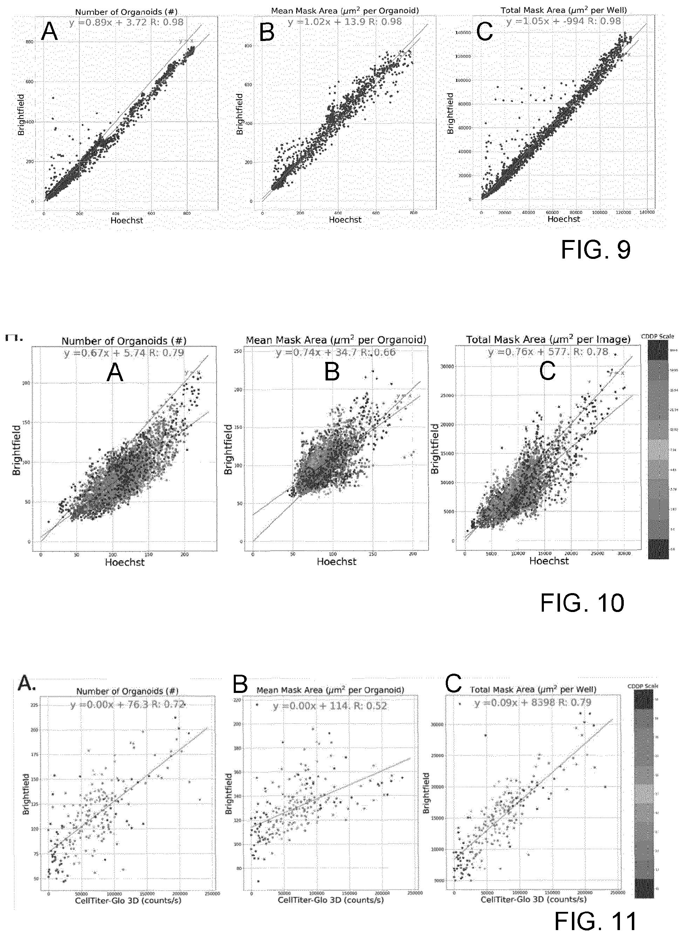

The processing method (200) may be used herein to determine a viability of a population of one or more c-objects that are single cells and/or assemblies of cells (*e.g.* organoid, spheroid) in a test sample (202). The inventors have found a close correlation between the total or mean area of highlighted c-objects in the primary output image (252) and viability (see FIG. 11 C); the correlation applies to assemblies of cells (*e.g.* organoid, spheroid). The inventors have also found a close correlation between the **count** of highlighted c-objects in the primary output image (252) and viability (see FIG. 11 A); the correlation applies to single cells. Viability as used herein means the portion of a population of c-objects that are functioning. An indicator of functioning is ATP generation. The processing method shown in **FIG. 3** (fluorescent label-free) may exemplarily be applied. The processing methods shown in **FIGs. 4** and **5** (making use of fluorescent label) - which also produce a primary output image (252) - may also be applied.

Provided is an assay for determining viability of a population of one or more c-objects that are single cells and/or assemblies of cells in a test sample (202), comprising:

- receiving at least one test BF image (212) of the test sample (202) acquired by a test microscope (204) having at least a Brightfield acquisition mode,
- processing the at least one test BF image (212) according to a processing method (200) described herein to obtain a primary output image (252), and
- determining the viability from the primary output image (252).

Provided is an assay for determining viability (normalised) of a population of one or more c-objects that are assemblies of cells (*e.g.* organoid, spheroid) in a test sample (202), comprising:

- receiving at least one test BF image (212) of the test sample (202) acquired by a test microscope (204) having at least a Brightfield acquisition mode,
- processing the at least one test BF image (212) according to a processing method (200) described herein to determine total or mean area of all highlighted c-objects in the primary output image (252),
- determining viability (normalised) from total or mean area of all c-objects.

The total or mean area of all c-objects is normalised to a vehicle (100% viability) and 100% cell death control (0% viability, *e.g.* control sample of c-objects containing staurosporine) to account for the area taken up by dead c-objects in the Brightfield image.

The vehicle is typically a solvent (*e.g.* used to dissolve a potential active agent such as DMSO and/or PBS)). The viability (normalised) is determined without need for a fluorescent label of cell death in the test sample.

Provided is an assay for determining viability (normalised) of a population of one or more c-objects that are single cells in a test sample (202), comprising:

- receiving at least one test BF image (212) of the test sample (202) acquired by a test microscope (204) having at least a Brightfield acquisition mode,
- processing the at least one test BF image (212) according to a processing method (200) described herein to determine a count all highlighted c-objects in the primary output image (252),
- determining viability (normalised) from the count of c-objects.

The count of c-objects is normalised to a vehicle (100% viability) and 100% cell death control (0% viability, *e.g.* control sample of c-objects containing staurosporine) to account for the counts taken up by dead c-objects in the Brightfield image. The viability (normalised) is determined without need for a fluorescent label of cell death in the test sample.

Viability (corrected) may be determined using a fluorescent label in the test sample (202) to measure cell death. An exemplary scheme is shown in **FIG. 5.** Provided is an assay for determining viability (corrected) of a population of one or more c-objects that are assemblies of cells (*e.g.* organoid, spheroid) in a test sample (202), comprising:

- receiving at least one test BF image (212, 212') and at least one test fluorescence image (214, 214') of the test sample (202) captured in an acquisition event by a test microscope (204) having at least a Brightfield acquisition mode and a fluorescence imaging mode, wherein the test sample has been contacted with a morphological fluorescent label for cell death;
- processing at least one the test BF image (212) according to a processing method (200) described herein to determine total or mean area of highlighted c-objects in the primary output image (252) (primary characterising parameters (272)),
- determining from the test fluorescence image (214, 214') a total or mean area of c-objects occupied by the fluorescence (specific characterising parameters (274));
- determining viability (corrected) from the total or mean area of all highlighted c-objects in the primary output image (252) minus total or mean area of c-objects occupied by the fluorescence.

The morphological fluorescent label for cell death may be any, for instance, Cytotox green, Cytotox red, CellTox green. For determining viability, the trained predictive model (240) used in the processing method (200) was preferably trained using training samples (102) comprising c-objects labelled with a live cell fluorescent label.

Viability (corrected) may be determined without any fluorescent label in the test sample (202). An exemplary scheme is shown in **FIG. 4.** Provided is an assay for determining viability (corrected) of a population of one or more c-objects that are single cells in a test sample (202), comprising:

- receiving at least one test BF image (212) of the test sample (202) captured in an acquisition event by a test microscope (204) having at least a Brightfield acquisition mode;
- processing at least one the test BF image (212) according to a processing method (200) described herein to obtain a primary output image (252) and a c-object parameter channel (256) of highlighted c-objects labelled as dead or a probability thereof wherein:

  - the PM (132) (Fig. 2) was trained by a training method described herein (100) wherein:

    - each training data set (110) was captured from a training sample (102) of c-objects labelled with a live cell fluorescent label and a morphological fluorescent label for cell death by the microscope in an acquisition event,
    - the training c-object data (124) comprised:

      - a training fluorescent image (114A) highlighting the live cell fluorescent label, and
      - a c-object parameter label for dead cells (114B') for each c-object, generated from the training fluorescent image (114A) highlighting the morphological fluorescent label for cell death,

- determining from the c-object parameter channel (256), a total count of highlighted c-objects labelled as dead (specific characterising parameters (274));
- determining viability (corrected) from the total count of all highlighted c-objects in the primary output image (252) (primary characterising parameters (272)) minus total count of highlighted c-objects labelled as dead for single cells.

The viability (corrected) of single cells is determined without need for a fluorescent label of cell death in the test sample. The morphological fluorescent label for cell death used during PM training may be any, for instance, Cytotox green, Cytotox red, CellTox green.

The processing method (200) may be used herein to determine a death of a population of one or more c-objects that are single cells and/or assemblies of cells (*e.g.* organoid, spheroid) in a test sample (202). Death as used herein means the portion of a population of c-objects that are non-functioning. An indicator of non-functioning is a breach of the cell-wall (*e.g.* lysis, apoptosis). The processing methods shown in **FIGs. 4** and **5** may exemplarily be applied.

Death may be determined using a fluorescent label in the test sample (202) to measure cell death. An exemplary scheme is shown in **FIG. 5.**

Provided is an assay for determining death in population of one or more c-objects that are assemblies of cells (*e.g.*

organoid, spheroid) in a test sample (202), comprising:

- receiving at least one test BF image (212, 212') and at least one test fluorescence image (214, 214') of the test sample (202) captured in an acquisition event by a test microscope (204) having at least a Brightfield acquisition mode and a fluorescence imaging mode, wherein the test sample (202) has been contacted with a morphological fluorescent label for cell death;
- processing at least one the test BF image (212, 212') according to a processing method (200) described herein to obtain a primary output image (252),
- determining death from the primary output image (252) and test fluorescence image (214, 214').

Death is determined from primary characterising parameters (272) obtained from primary output image (252) and specific characterising parameters (274) obtained from test fluorescence image (214, 214').

Provided is an assay for determining death in population of one or more c-objects that are assemblies of cells (*e.g.* organoid, spheroid) in a test sample (202), comprising:

- receiving at least one test BF image (212) and at least one test fluorescence image (214, 214') of the test sample (202) captured in an acquisition event by a test microscope (204) having at least a Brightfield acquisition mode and a fluorescence imaging mode wherein the test sample (202) has been contacted with a morphological fluorescent label for cell death;
- processing at least one the test BF image (212) according to a processing method (200) described herein to determine total or mean area of highlighted c-objects in the primary output image (252) (primary characterising parameters (272)),
- determining from the test fluorescence image (214, 214') a total or mean area of c-objects occupied by the fluorescence (specific characterising parameters (274));
- determining death from:

  - total or mean area of fluorescence emitted by the c-objects in the test fluorescence image (214, 214') divided by total or mean area of all highlighted c-objects in the primary output image (252), or
  - total or mean intensity of fluorescence emitted by the c-objects in the test fluorescence image (214, 214') divided by total or mean area of all highlighted c-objects in the primary output image (252).

The above parameters may be normalised to a vehicle (0% cell death) and 100% cell death control (e.g. staurosporine). The morphological fluorescent label for cell death may be any, for instance, Cytotox green, Cytotox red, CellTox green. For determining death, the trained predictive model (240) used in the processing method (200) was preferably trained using training samples (102) comprising c-objects labelled with a live cell fluorescent label.

Death may be determined without any fluorescent label in the test sample (202). An exemplary scheme is shown in **FIG. 4.** Provided is an assay for determining death in population of c-objects that are single cells in a test sample (202), comprising:

- receiving at least one test BF image (212) of the test sample (202) captured in an acquisition event by a test microscope (204) having at least a Brightfield acquisition mode;
- processing at least one the test BF image (212) according to a processing method (200) described herein wherein:

  - the PM was trained by a training method described herein (100) wherein

    - each training data set (110) was captured from a training sample (102) of c-objects labelled with a live cell fluorescent label and a morphological fluorescent label for cell death by the microscope in an acquisition event,
    - the training c-object data (124) comprised:

      - a training fluorescent image (114A) highlighting the live cell fluorescent label, and
      - a c-object parameter label for dead cells (114B') for each c-object, generated from the training fluorescent image (114A) highlighting the morphological fluorescent label for cell death,

- determining from the primary output image (252) and the c-object parameter channel (256) for dead cells, a count of highlighted c-objects labelled as dead;
- determining death from:

- total count of highlighted c-objects labelled as dead divided by total count of all highlighted c-objects in the primary output image (252) for single cells.

The death of single cells is determined without need for a fluorescent label of cell death. The morphological fluorescent label for cell death used during PM training may be any, for instance, Cytotox green, Cytotox red, CellTox green.

The processing method (200) may be used herein to determine a growth (proliferation) of a population of one or more viable c-objects (viable growth) that are single cells and/or assemblies of cells (*e.g.* organoid, spheroid) in a test sample (202). Viable growth as used herein means the growth rate among the portion of a population of c-objects that are viable. Dead c-objects are screened out by the assay, leading to a more accurate assay. An indicator of viable growth is increase in morphological size among functioning c-objects. An indicator of functioning is ATP generation. Viable growth may be determined from area of an individual c-object, mean area of a c-object, and/or from total area of all c-objects in the primary output image (252). The processing methods shown in **FIGs. 4** and **5** may exemplarily be applied.

Viable growth may be determined using a fluorescent label in the test sample (202) to measure cell death. An exemplary scheme is shown in **FIG. 5**.

Provided is an assay for determining viable growth in population of one or more viable c-objects that are assemblies of cells (*e.g.* organoid, spheroid) in a test sample (202), comprising:

- receiving, at multiple time points, at least one test BF image (212) and at least one test fluorescence image (214, 214') of the test sample (202) captured in an acquisition event by a test microscope (204) having at least a Brightfield acquisition mode and a fluorescence imaging mode, wherein the test sample (202) has been contacted with a morphological fluorescent label for cell death;
- processing at least one the test BF image (212) according to a processing method (200) described herein to obtain a primary output image (252) at each time point;
- determining viable growth from the primary output image (252) and test fluorescence image (214, 214') at the multiple time points.

Provided is an assay for determining viable growth in population of one or more viable c-objects that are assemblies of cells (*e.g.* organoid, spheroid) in a test sample (202), comprising:

- receiving, at multiple time points, at least one test BF image (212, 212') and at least one test fluorescence image (214, 214') of the test sample (202) captured in an acquisition event by a test microscope (204) having at least a Brightfield acquisition mode and a fluorescence imaging mode, wherein the test sample (202) has been contacted with a morphological fluorescent label for cell death;
- processing at least one the test BF image (212, 212') according to a processing method (200) described herein to determine total or mean area or individual area of highlighted c-objects in the primary output image (252) at each time point;
- determining from the test fluorescence image (214, 214') a total area or mean area or individual area of c-objects occupied by the fluorescence;
- determining viable growth from a total area or mean area or individual area of the highlighted c-objects in the primary output image (252) minus a total area or mean area or individual area of fluorescence emitted by the c-objects in the test fluorescence image (214, 214') as a function of time.

The morphological fluorescent label for cell death may be any, for instance, Cytotox green, Cytotox red, CellTox green. For determining viable growth, the trained predictive model (240) used in the processing method (200) was preferably trained using training samples (102) comprising c-objects labelled with a live cell fluorescent label.

The processing method (200) may be used herein to determine a growth (proliferation) of a population of one or more viable c-objects that are assemblies of cells (*e.g.* organoid, spheroid) in a test sample (202). Growth as used herein means the growth rate among the population of c-objects. An indicator of growth is increase in morphological size among functioning c-objects. Growth may be determined from area of an individual c-object area, mean area of a c-object, and/or from total area of all c-objects in the primary output image (252). The processing method shown in **FIG. 3** (fluorescent label-free) may exemplarily be applied. The processing methods shown in **FIGs. 4** and **5** (making use of fluorescent label) are not excluded as they also produce a primary output image (252).

Growth may be determined without any fluorescent label in the test sample (202). An exemplary scheme is shown in **FIG. 3**. Provided is an assay for determining growth in population of one or more c-objects that are assemblies of cells (*e.g.* organoid, spheroid) in a test sample (202), comprising:

- receiving, at multiple time points, at least one test BF image (212) of the test sample (202) captured in an acquisition event by a test microscope (204) having at least a Brightfield acquisition mode;
- processing at least one the test BF image (212) according to a processing method (200) described herein to obtain a primary output image (252) at each of the multiple time points;
- determining growth from the primary output images (252).

Provided is an assay for determining growth in population of one or more c-objects that are assemblies of cells (*e.g.* organoid, spheroid) in a test sample (202), comprising:

- receiving, at multiple time points, at least one test BF image (212) of the test sample (202) captured in an acquisition event by a test microscope (204) having at least a Brightfield acquisition mode;
- processing at least one the test BF image (212) according to a processing method (200) described herein to determine individual, mean or total area of highlighted c-objects in the primary output image (252) at the multiple time points;
- determining growth from a total area or mean area or individual area of the highlighted c-objects in the primary output image (252) as a function of time.

For determining growth, the trained predictive model (240) used in the processing method (200) was preferably trained using training samples (102) comprising c-objects labelled with a live cell fluorescent label.

The processing method (200) may be used herein to determine velocity of one or more c-objects that are single cells and/or assemblies of cells (*e.g.* organoid, spheroid) in a test sample (202). Velocity as used herein means the change in distance (and direction) over time for c-objects in the population. The velocity may be determined by tracking the movement path over time for individual c-objects. The velocity may be averaged over the population. C-objects that exhibit no movement may or may not be included in the average. Velocity may be an indicator of Epithelial to mesenchymal transition (EMT), invasion/migration, aggression, or activation of immune cells or fibroblasts. The processing method shown in **FIG. 3** (fluorescent label-free) may exemplarily be applied. The processing methods shown in **FIGs. 4** and **5** (making use of fluorescent label) are not excluded as they also produce a primary output image (252).

Provided is an assay for determining velocity of one or more single cells and/or assemblies of cells (e.g. organoid, spheroid) in a population in a test sample (202), comprising:

- receiving several test BF images (212) over time of the test sample (202) each acquired by a test microscope (204) having at least a Brightfield acquisition mode,
- processing the several test BF image (212) according to a processing method (200) described herein to obtain several primary output image (252), and
- determining the velocity of single cells and/or assemblies of cells (*e.g.* organoid, spheroid) from the primary output image (252).

Provided is an assay for determining velocity of one or more single cells and/or assemblies of cells (e.g. organoid, spheroid) in a population in a test sample (202), comprising:

- receiving, at multiple time points, at least one test BF image (212) of the test sample (202) each acquired by a test microscope (204) having at least a Brightfield acquisition mode,
- processing the at least one test BF image (212) according to a processing method (200) described herein to obtain the primary output image (252) at the multiple time points,
- tracking over the multiple time points movement of highlighted c-objects (254) in the primary output images (252); and
- determining from the distance (and direction) moved by the highlighted c-objects (254) over time, the velocity of single cells and/or assemblies of cells.

The tracking of highlighted c-objects (254) may be performed using standard image tracking software, tracking software examples include FIJI, Velocity, TrackMate.

The processing method (200) may be used herein to determine fusion of c-objects that are single cells and/or assemblies of cells (*e.g.* organoid, spheroid) in a test sample (202). Fusion as used herein means an event in which previously separate c-objects move towards each other and join together to form a single c-object (*e.g.* 2 cells becoming 1 fused cell). The fusion may be determined by tracking the movement path over time for individual c-objects. The fusion may be averaged over the population. C-objects that exhibit no movement may or may not be included in the average. Fusion may be an indicator of Epithelial to mesenchymal transition (EMT), invasion/migration, aggression, or activation of immune cells or fibroblasts. The processing methods shown in **FIGs. 4** and **5** (making use of fluorescent label) are not excluded as they also produce a primary output image (252).

Provided is an assay for determining fusion of single cells and/or assemblies of cells (e.g. organoid, spheroid) in a population in a test sample (202), comprising:

- receiving several test BF images (212) over time of the test sample (202) each acquired by a test microscope (204) having at least a Brightfield acquisition mode,
- processing the several test BF image (212) according to a processing method (200) described herein to obtain several primary output image (252), and
- determining the fusion of single cells and/or assemblies of cells (*e.g.* organoid, spheroid) from the primary output image (252).

Provided is an assay for determining fusion of single cells and/or assemblies of cells (e.g. organoid, spheroid) in a population in a test sample (202), comprising:

- receiving several test BF images (212) over time of the test sample (202) each acquired by a test microscope (204) having at least a Brightfield acquisition mode,
- processing the several test BF image (212) according to a processing method (200) described herein to obtain several primary output images (252),
- tracking over time movement of highlighted c-objects (254) in the several primary output images (252); and
- determining from the movement paths of the highlighted c-objects (254) over time, the fusion of single cells and/or assemblies of cells.

A fusion event may be recorded when the movement paths of two or more highlighted c-objects (254) converge and join, and remain joined. The tracking of highlighted c-objects (254) may be performed using standard image tracking software. According to one protocol, edges are derived from nearest neighbor matches of objects in sequential timepoints within a threshold distance. A greedy assignment is made to those edges. Each set of edges above a specified length (*e.g.* 3) is a track. Objects that do not have an assigned edge after greedy assignment may be assigned to an object with an existing edge if the area of that child (fused) object is above 0.8 the sum of the parent objects being merged. If this edge can be made, the edge formed under this may be considered a fusion event.

The processing method (200) may be used herein to determine splitting of c-objects that are single cells and/or assemblies of cells (*e.g.* organoid, spheroid) in a test sample (202). Splitting as used herein means an event in which a previously a singular c-object divides into two or more separate c-objects that move away from other (*e.g.* 1 cell becoming 2 separate cell). The splitting may be determined by tracking the creating of new movement path over time for a singular c-object. The splitting may be averaged over the population. C-objects that exhibit no movement may or may not be included in the average. Splitting may be an indicator of Epithelial to mesenchymal transition (EMT), invasion/migration, or aggression. The processing methods shown in **FIGs. 4** and **5** (making use of fluorescent label) are not excluded as they also produce a primary output image (252).

Provided is an assay for determining splitting of single cells and/or assemblies of cells (e.g. organoid, spheroid) in a population in a test sample (202), comprising:

- receiving several test BF images (212) over time of the test sample (202) each acquired by a test microscope (204) having at least a Brightfield acquisition mode,
- processing the several test BF image (212) according to a processing method (200) described herein to obtain several primary output image (252), and
- determining the splitting of single cells and/or assemblies of cells (*e.g.* organoid, spheroid) from the primary output image (252).

Provided is an assay for determining splitting of single cells and/or assemblies of cells (e.g. organoid, spheroid) in a population in a test sample (202), comprising:

- receiving several test BF images (212) over time of the test sample (202) each acquired by a test microscope (204) having at least a Brightfield acquisition mode,
- processing the several test BF image (212) according to a processing method (200) described herein to obtain several primary output images (252),
- tracking over time movement of highlighted c-objects (254) in the several primary output images (252); and
- determining from the movement paths of the highlighted c-objects (254) over time, the splitting of single cells and/or assemblies of cells.

A splitting event may be recorded when movement path of a highlighted c-object (254) branches into two more separate paths. The tracking of highlighted c-objects (254) may be performed using standard image tracking software. According to one protocol, edges are derived from nearest neighbor matches of objects in sequential timepoints within a threshold distance. A greedy assignment is made to those edges. Each set of edges above a specified length (*e.g.* 3) is a track. Objects that do not have an assigned edge after greedy assignment may be assigned to an object with an existing edge if the area of that child objects are less the sum of the parent object being split. If this edge can be made, the edge formed under this may be considered a splitting event.

As mentioned before, the assays may be used in a screening method for a potential active agent. The screening method may be for determining an effect of a potential active agent, an efficacy of a potential active agent, a resistance to treatment with a potential active agent, identifying a potential active agent, or determining other properties relating to a potential active agent. The potential active agent is intended to affect a characterising parameter of a c-object.

The assay may involve a measurement of one of more characterising parameters (*e.g.* primary, specific, derivative). The assay be a measurement of viability (general, normalised, corrected), death, growth, velocity, fusion, splitting. The screening method typically compares an assay performed in the absence of potential active agent with an assay performed in the presence of potential active agent (usually at varying concentrations). The test sample may be a culture or co-culture; hence one or more c-objects may be cultured during the screening. The one or more c-objects may be cancer cells or cancer-related single cells or assemblies of cells (organoids or spheroids). The assays may be performed continuously (real time) or at discrete time points. The screening method may be on multiple test samples held on multi-well plates (e.g. 384 well).

The potential active agent may be an anti-cancer (*e.g.* tumour) agent.

Provided herein is a screening method for determining an effect of one or more potential active agents on a test sample (202) containing a population of one or more c-objects that are single cells and/or assemblies of cells (*e.g.* organoid, spheroid) comprising:

- carrying out an assay as described herein on the test sample (202) containing one or more potential active agents;
- determining from the assay, an effect of the one or more potential active agent.

Provided herein is a screening method for determining an effect of one or more potential active agents on a population of one or more c-objects that are single cells and/or assemblies of cells (*e.g.* organoid, spheroid) comprising:

- carrying out an assay as described herein on a plurality of test samples (202), wherein at least one of the test samples (202) contains the c-objects and is absent of potential active agent, and at least one of the test samples contains the c-objects and the one or more potential active agents;
- determining, by comparing the assays of the different test samples (202), an effect of the one or more potential active agent.

Provided herein is a screening method for determining an efficacy of one or more potential active agents in a test sample (202) containing a population of one or more c-objects that are single cells and/or assemblies of cells (*e.g.* organoid, spheroid) comprising:

- carrying out an assay as described herein on the test sample (202) containing the one or more potential active agents;
- determining from the assay, an efficacy of the one or more potential active agent.

Provided herein is a screening method for determining an efficacy of one or more potential active agents on a population of one or more c-objects that are single cells and/or assemblies of cells (*e.g.* organoid, spheroid) comprising:

- carrying out an assay as described herein on a plurality of test samples (202), wherein at least one of the test samples (202) contains the c-objects and is absent of potential active agent, and at least one of the test samples contains the c-objects and the one or more potential active agents;
- determining, by comparing the assays of the different test samples (202), an efficacy of the one or more potential active agent by comparing the test samples.

A more efficacious potential active agent will exhibit an increased effect compared with a less efficacious potential active agent. A more efficacious potential active agent may exhibit for instance increased death, reduced growth, decreased velocity, decreased fusion, decreased splitting compared with a less efficacious potential active agent.

A resistant c-object is one that exhibits a resistance to an (therapeutic) effect of one or more potential active agents. Patient-derived organoids contain a heterogeneous population of cells which may have different mutations. Some mutations may result in a reduced response to a potential active agent. These cells eventually grow again, leading to a relapse in a cancer patient. The present screening method identifies resistance *ex vivo.*

Provided herein is a screening method for determining a resistance of c-objects that are single cells and/or assemblies of cells (*e.g.* organoid, spheroid) in a population to one or more potential active agents comprising:

- carrying out an assay as described herein on a test sample (202) containing the population of the c-objects and the one or more potential active agents;
- determining from the assay, a resistance of the one or more potential active agent.

Resistant individual c-objects will exhibit a growth (*i.e.* growth rate) in the presence of the one or more potential active agents that is greater than an average of the growth of all c-objects in the population. The growth is measured from the change in c-object area in the primary output image (252) over time.

Provided herein is a screening method for identifying resistant c-objects that are single cells and/or assemblies of cells (*e.g.* organoid, spheroid) in a population, which resistant c-objects show resistance to an effect of one or more potential active agents comprising:

- carrying out a growth assay as described herein on a test sample (202) containing the population of the c-objects and the one or more potential active agents, to determine growth of individual c-objects and mean growth of c-objects in the test sample (202),
- identifying from the assay, resistant c-objects in the test sample (202), wherein a resistant c-object has a different individual growth compared with the mean growth of the test sample.

The mean growth has a mean growth standard deviation. The resistant c-objects may be identified when its individual growth is different from the mean growth by one or more mean growth standard deviations. The resistant c-object has a faster growth than the mean growth. The growth assay may be the viable growth assay or the growth assay described herein.

Provided herein is a screening method for identifying one or more potential active agents effective against single cells and/or assemblies of cells (*e.g.* organoid, spheroid),

- carrying out an assay as described herein on a plurality of test samples (202), wherein at least one of the test samples (202) contains the c-objects and is absent of potential active agent, and at least one of the test samples contains the c-objects and the one or more potential active agents;
- identifying, by comparing the assays of the different test samples (202), one or more effective potential active agent by comparing the test samples.

A more effective potential active agent can be identified by an increased effect compared with a less effective potential active agent. A more effective potential active agent may exhibit for instance increased death, reduced growth, decreased velocity, decreased fusion, decreased splitting compared with a less effective potential active agent.

The predictive model (PM) is preferably one built on the advances made by the UNET, feature pyramid and ResNet network architectures. As per the feature pyramid and UNET designs, the overall structure may contain convolutional blocks which reduce spatial size before being passed to the next block. In the network introduced, the reduction may be accomplished by a convolutional layer with stride-2 instead of a down sampling function. As per the insights of the ResNet architecture, skip connections are made between layers to speed up learning. Instead of summation skip connections that exist between intermediate layers, the present CNN network skips the output of all intermediate layers to a final convolutional layer.

The predictive model (PM) is preferably a convoluted Neural Network model comprising a plurality (*e.g.* 4 or more) of standard blocks through which the test or training image is sequentially passed. Each standard block comprises a plurality of convolution layers. An output of each standard block that is passed to a subsequent standard block is at half the spatial dimension (e.g. in X and Y) of an input to said standard block. The output of each standard block is also resampled to the match the size of the input to said standard block (resampled outputs), and is passed to a final block. The final block is one convolutional layer, and receives:

the output of the final standard block,
the resampled outputs of each standard block, and
the original image, and

concatenates them with one or more output channels.

In order to reduce overfitting and promote generalisability, the training BR image (112) may not be inputted directly into the PM (132); it may be randomly resized to different scales, and/or cropped into 128 pixel by 128 pixel sections, and/or introduced to noise via a gaussian blur or salt/pepper noise, and/or randomly flipped and rotated.

In order to promote more efficient approach to the training c-object data (124) of the training set (120), the some data training sets (120) may contain incorrect data, for instance, false positives (*e.g.* live cell fluorescently labelled objects in the training fluorescence image that are not c-objects) and/or false negatives (*e.g.* c-objects in the training BF image that have not been labelled in the training fluorescence image).

The CNN comprises shortcuts. The final block receives not just the output of the final standard block, but also resampled outputs of each standard block. This has been found to be optimal for biological application. Steps of back propagation - where errors in the PM are corrected so that the processed training BF image data (134) approaches the training c-object data (124) of the training set (120) - become more efficient.

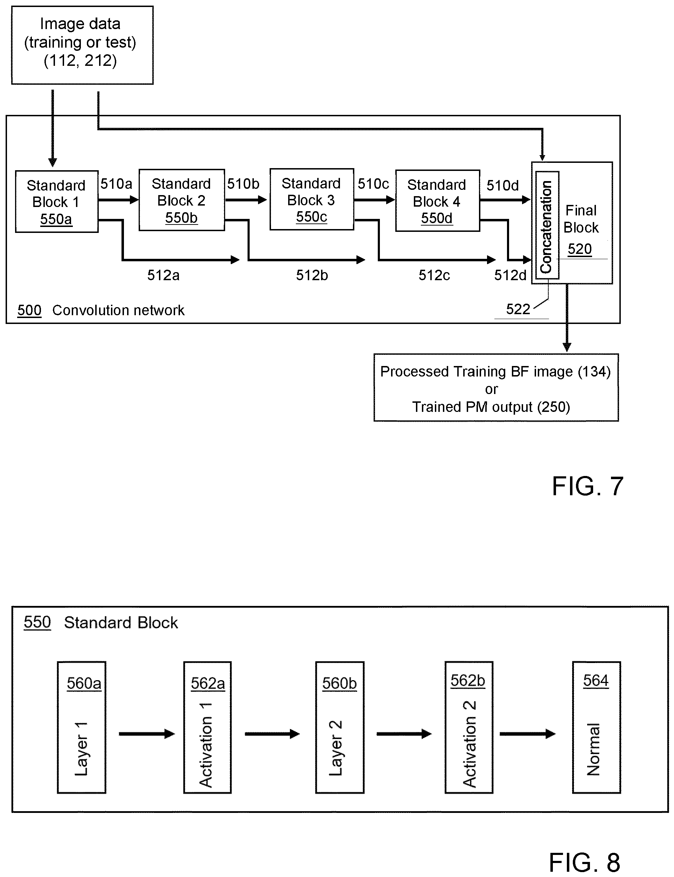

FIG. 7 shows an exemplary convolution network (500) of 4 standard blocks (550a-d). The forward method of the convolutional network (500) comprises passing a training image (112) or a test image (212) sequentially through a plurality (*e.g.* 4 or more) standard blocks (550a-d). Each standard block (550a-d) may halve the spatial dimensions via stride-2 convolution before being passed (510a-d) to the next standard block. The output (512a-d) of each standard block (550a-d) may also be resampled to the original input size and passed to the final block (520). All block outputs (512a-d, 510d) as well as the original image (112, 212) may be concatenated (522) at the final block (520). The final block may comprises a 1x1 convolution that produces the final output (Processed Training BF image (134) or Trained PM output (250)) with the correct number of output channels.

FIG. 8 shows an exemplary standard block (550) having plurality of pairwise convolution layers (560a-c) and activation functions (562a-b); the convolution layer (560a-c) is first in the pair. The final step (564) of the standard block (550) is a range normalisation function. Data is passed sequentially through the sequence 560a, 562a, 560b, 562b, 564.

Convolution layer 1 (560a) is 3x3 padded convolutional layer with stride-1. Activation function 1 (562a) is a non-linear activation function. Convolutional Layer 2 (560b) is a 3x3 padded convolutional layer with stride-2. Activation function 2 (562b) is a non-linear activation function. The final normalisation function (560c) is a range normalization function configured to normalise each output channel to range 0 to 1. The output of each standard block (550) is one half the size in X and Y dimensions from its input.

After each convolutional layer (560a-b), the output is passed through a non-linear activation function (562a-b). The non-linear activation function (562a-b) is preferably a Leaky ReLU function. The Leaky ReLU function returns the original value if it is above 0 and 0.1 times the value if it is below zero. The Leaky ReLU has been shown to be an improvement over the standard ReLU function due to the existence of gradients below the zero cutoff which allow for continued back propagation. Thus acting as a solution for the "Dead ReLU" problem. An exemplary function describing the Leaky ReLu is shown in equation [1]:

$$LeakyReLU(x) = max(0,x) + 0.1*min(0,x) \qquad [1]$$

The final step of the standard block (550) may be a Range Normalization Function (564). Instead of a more common statistical batch normalization which normalizes the average activation at the end of each block by setting the mean value to 0.5 and the standard deviation to 1, a range normalization may be used that that sets the minimum activation to 0 and divides by the maximum activation or 1. An exemplary range normalization function is shown in equation [2], where x is the activation values.

$$SubMax(x) = min(\ 1, -min(x)) \qquad [2]$$

$$Activation(x) = (x - min(x))/(SubMax(x))$$

The main reason for the use of this activation function is first that it enforces activation of range 0 to 1. Additionally, it has been shown that activation distributions are asymmetrical and highly skewed. As a result, the commonly used statistical batch normalization function which normalizes to a mean and standard deviation makes critical assumptions about symmetry that is unlikely to be true about the data and decrease performance.

The predictive model functions as a detector rather than a classifier. In practice, this means that argmax functions such as a SoftMax which force outputs of a network to converge towards a singular class to be 1 while all others are 0 cannot be used. Additionally, loss functions which rely on argmax outputs such as Cross Entropy cannot not be used in favour of loss functions such as DICE which evaluate each class individually.

The benefits of this are two-fold. First, it also does not require the learning and evaluation of the background as a class, making it possible for previously unseen objects, cellular debris, glare, and shadows to be ignored without dedicated training. Second, this allows the learning and production of multiple, simultaneous outputs in which a single pixel may be positive in multiple classes, such as: 1) detection of location, 2) detection of processes (e.g. death, mitosis), and 3) detection of subcomponents (e.g. processes, nuclei). Lastly, the ability to learn multiple classes with minimal inference of one another, previously trained models can be used for transfer learning of new models, or models can be taught separately to detect different classes and brought together.

A method described herein may be a computer implemented method. The method may be performed using a standard computer system such as an Intel Architecture IA-32 based computer system 2, and implemented as programming instructions of one or more software modules stored on non-volatile (*e.g.*, hard disk or solid-state drive) storage associated with the corresponding computer system. However, it will be apparent that at least some of the steps of any of the described processes could alternatively be implemented, either in part or in its entirety, as one or more dedicated hardware components, such as gate configuration data for one or more field programmable gate arrays (FPGAs), or as application-specific integrated circuits (ASICs), for example.

Provided is a computing device or system configured for performing a method as described herein.

Provided is a device program or computer program product having instructions which when executed by a computing device or system cause the computing device or system to perform a method as described herein.

Provided is a computer readable medium having stored thereon instructions which when executed by a computing device or system cause the computing device or system to perform a method as described herein.

Provided is a data stream representative of a computer program or computer program product having instructions which when executed by a computing device or system cause the computing device or system to perform a method as described herein.

**Example**

Tumor tissue and normal lung tissue (distant from the tumor site) was obtained from NSCLC undergoing curative surgery at the Antwerp University Hospital (UZA). Written informed consent was obtained from all patients, and the study was approved by the UZA Ethical Committee (ref. 17/30/339). All samples were registered in the Biobank Antwerp, Belgium; ID: BE 71030031000.

Tissue was stored in Ad-DF+++ (Advanced DMEM/F12 (GIBCO), with 1% GlutaMAX (GIBCO), 1% HEPES (GIBCO), 1% penicillin/streptomycin (GIBCO) supplemented with 2% Primocin (Invivogen) at 4°C and transported on ice to be processed within 24 hours for organoid culture according to the protocol of Dijkstra *et al.* with some minor differences. Tumor and normal tissue were minced with two scalpels, collected in 0.1% BSA precoated tubes and washed with PBS. Next, fragments were dissociated with 0.5 mg/mL dispase type II (Sigma-Aldrich), 1.5 mg/mL collagenase type II (Sigma-Aldrich), 1:500 Primocin and 10 $\mu$M Y-27632 (Cayman Chemicals) in MG$^{2+}$/Ca$^{2+}$ PBS (GIBCO) for 60 minutes at 37°C. Digested cells were washed three times with PBS and resuspended in 2/3 Cultrex Type 2 (R&D Systems) and 1/3 Full Lung Ad-DF+++ medium and plated in drops which were allowed to solidify for 30 minutes at 37°C after which they were overlayed with Full Ad-DF+++ medium. Full Ad-DF+++ medium consisted of 10% Noggin conditioned medium (HEK293-mNoggin-Fc; kindly provided by Hans Clever, Hubrecht Institute), 10% R-spondin-1 conditioned medium (293T-HA-Rspol-Fc; kindly provided by Calvin Kuo, Stanford University), 1 x B27 supplement (GIBCO), 10 mM nicotinamide (Sigma Aldrich), 25 ng/mM human recombinant FGF-7 (Peprotech), 100 ng/mL human recombinant FGF-10 (Peprotech), 500 nM A83-01 (Tocris), 1 $\mu$M SB202190 (Cayman Chemicals) and 5 $\mu$M Y-27632 (only used after passaging and thawing). For passaging, organoids were digested to single cells with TrypLE Express (GIBCO). For cryopreservation, 3-day old organoids were harvested with Cultrex Harvesting Solution (R&D Systems) and frozen in Recovery Cell Culture Freezing Medium (GIBCO). Samples were tested for Mycoplasma contamination with the MycoAlert Mycoplasma Detection Kit (LONZA).

Three days before the start of the experiment, organoids were passaged as single cells using TrypLE and plated in Cultrex drops. Subsequently, organoids were harvested with Cultrex Harvesting Solution, collected in a 15 mL tubes coated with 0.1% BSA/PBS, washed with Ad-DF+++ and resuspended in 1 mL Full Ad-DF+++ medium (without Y-27632). Next the number of organoids were counted with the Sceptor 2.0 using a 60 $\mu$M sensor (Merck Millipore). Organoids were then diluted in Full Ad-DF+++ and 5% Cultrex on ice to a concentration that results in 500-2000 organoids/40$\mu$L. 40$\mu$L of this solution was plated into a 384-well ultra-low attachment microplate (Corning, #4588) using the Tecan Spark Cyto Injector at a speed of 100 $\mu$L/s to avoid bubbles. All tubes and the Spark Cyto Injector were primed with 0.1 % BSA/PBS to avoid sticking of the organoids. Next, the plate was centrifuged (100 rcf, 30 sec, 4°C) and incubated for at least 30 minutes at 37°C.

All drugs and fluorescent reagents were added to the plate using a Tecan D300e Digital Dispenser. Cytotox Green (75 nM / well, Sartorius), Caspase 3/7 Green Reagent (2.5 $\mu$M / well, Sartorius), Z-VAD-FMK (50 $\mu$M / well, Bachem AG), Gemcitabine, Erlotinib, Gefitinib, Osimertinib and Afatinib (Selleckchem) were dissolved in DMSO. Hoechst 33342 (50 nM / well, ThermoFisher), Cisplatin (Tocris) and Carboplatin (Selleckchem) were dissolved in PBS to yield a final concentration of 0.3 Tween-20 required for dispensing with the D300e Dispenser. Brightfield, green and blue fluorescent whole-well images (4x objective) were taken as an acquisition event with the Tecan Spark Cyto set at 37°C / 5% CO$_2$ for kinetic experiments in a humidity cassette. For endpoint measurement of ATP levels, 40 $\mu$L CellTiter-Glo 3D reagent (Promega) was injected using the Tecan Spark Cyto Injector to each well, shaken for 5 minutes and measured after 30 minutes incubation with the Tecan Spark Cyto luminescence module.

Dose-response curves plotted, and IC50-values were calculated using GraphPad Prism 9. Drug concentrations were transformed to log10 and raw data results were normalized to vehicle (100%) and/or baseline control (0%) (Staurosporin 5 $\mu$M or 100 $\mu$M cisplatin) for viability assessment, and vice versa for cell death assessment. Curves were fitted using the log (inhibitor/agonist) vs. normalized response - Variable slope function. Screen quality was determined by calculating the Z Factor score using the equation [3]:

$$1 - \left[ \frac{3 \times SD\ (negative\ control) + 3 \times SD\ (positive\ control)}{average\ (negative\ conrol) - average\ (postive\ control)} \right]$$

Equation [3]

The training sample contained the organoids and single cells (c-object) as described above labelled with Hoechst 33342 (green), and the Brightfield image and the Hoechst fluorescence image captured by the Tecan Spark Cyto were used as the data training set. Software package Pytorch was used to modify the predictive model.

Hoechst fluorescence image was ground truth (training c-object data). In order to use the Hoechst fluorescence intensity images as ground truth, intensity values to be used against the predictions were pre-processed as a loss function. Raw Hoechst fluorescence images were first normalized from uint8 to float [0,1]. Subsequently, images were median filtered with a 3x3 kernel. Subsequently, images were saturation clipped and renormalized to 0.2 so that values equal to and greater than 0.2 were set to 1. Values between 0 and 0.2 where linearly scaled to 0 and 1.Saturation clipping rather than thresholding provided a benefit of maintaining soft probabilities, which minimised impact of poor threshold choice and provided gradients for learning by back propagation. As organoids increased in size and the total amount of Hoechst did not increase, the dye was distributed within the organoid, resulting in weaker signal over the course of growth; soft probabilities diminished this effect.

A soft dice loss coefficient as defined in equation [4] was used as the basis for the loss function used in training. The dice coefficient is a commonly used accuracy metric for sematic segmentation. It is defined as intersection over union between ground truth and prediction values. A key attribute of soft coefficients are the ability to use values between 0 and 1 instead of binary pixel classifications. A dice loss is defined as 1 minus the buffered or smoothed dice coefficient.

| $Intersection = 2 \sum_i^c p_i g_i$ | $Union = \sum_i^c p_i{}^2 g_i{}^2$ |
|---|---|
| $$Dice\ Loss = 1 - \frac{Intersection + 1}{Union + 1}$$ ||
| Equation [4]: loss function used in training where p = Prediction, g = Ground Truth/Target, c = number of classes , i = instance of each set ||

In order to reduce overfitting and promote generalisability, raw images were not fed into the CNN in the training phase. Instead, they were randomly resized to different scales, cropped into 128 pixel by 128 pixel sections, introduced to noise via a gaussian blur or salt/pepper noise, and finally randomly flipped and rotated.

In each epoch of the training phase, the average loss for each input image was recorded and used as a weighting parameter for selection of that image in future epochs. Images that have not be trained yet have the highest priority and were selected first before repeats were selected. The rationale here is that prioritizing training on images in which performance is lowest will be the most effective. The weighted selection scheme also had a benefit of compensating for uneven distributions of image content. Overrepresented images may be first learned in early training cycles and then be suppressed in future training cycles.

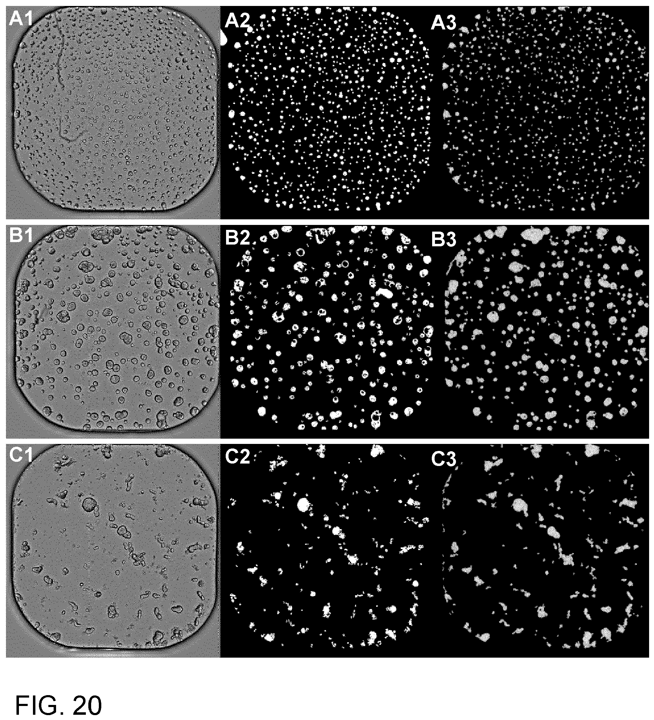

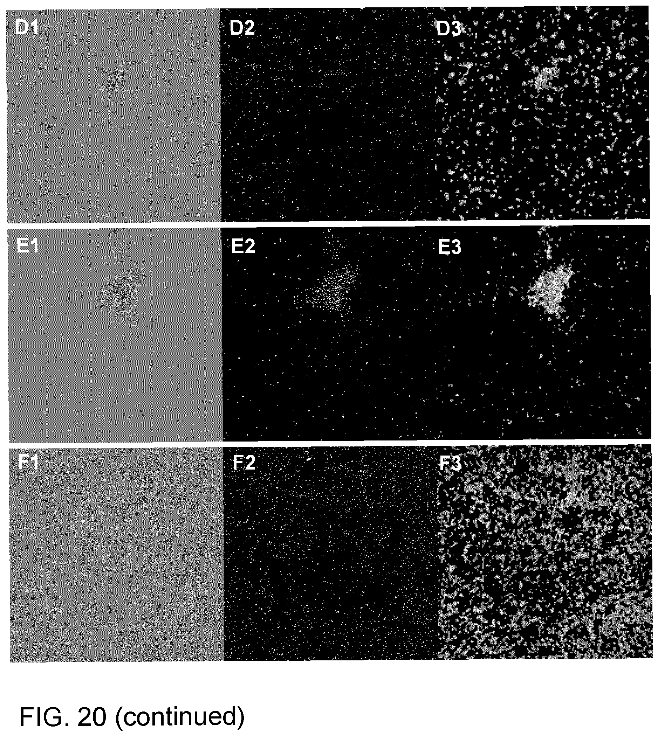

An example of training data used to train the predictive model (132) is shown in **FIG. 20.** Images **A1, B1...** to **F1** are all training BF images (112, 112'), and images **A2, B2...** to **F2** are all corresponding training fluorescent images (114, 114') from different training samples A to F captured with the training microscope in an acquisition event. Each pair of training BF images and training fluorescent images **(A1+A2; B1+B2....F1+F2)** constitute a data training set (120). Images **A3, B3...** to **F3** are probability map image outputs of the predictive model (134) for training samples A to F.

A first sample contained a serial dilution of single cells and 3-day old organoids from two lines (NSCLC_013T and NSCLC_006N) prepared as described above. A test sample contained no fluorescent label. A control sample was labelled using Hoechst fluorescence (Hoechst 33342 (blue)).The Brightfield image (test sample) and the Hoechst fluorescence image (control sample) were captured by the Tecan Spark Cyto. The Brightfield image was processed using the method described herein, and the trained PM output was a primary output (BF) image (252). Pairwise comparison **(FIG. 9)** showed a strong correlation of the organoid (c-object) Count **(FIG. 9A),** Mean Area **(FIG. 9B),** and Total Area **(FIG. 9C)** detected in the primary output image when compared to Hoechst fluorescence image.

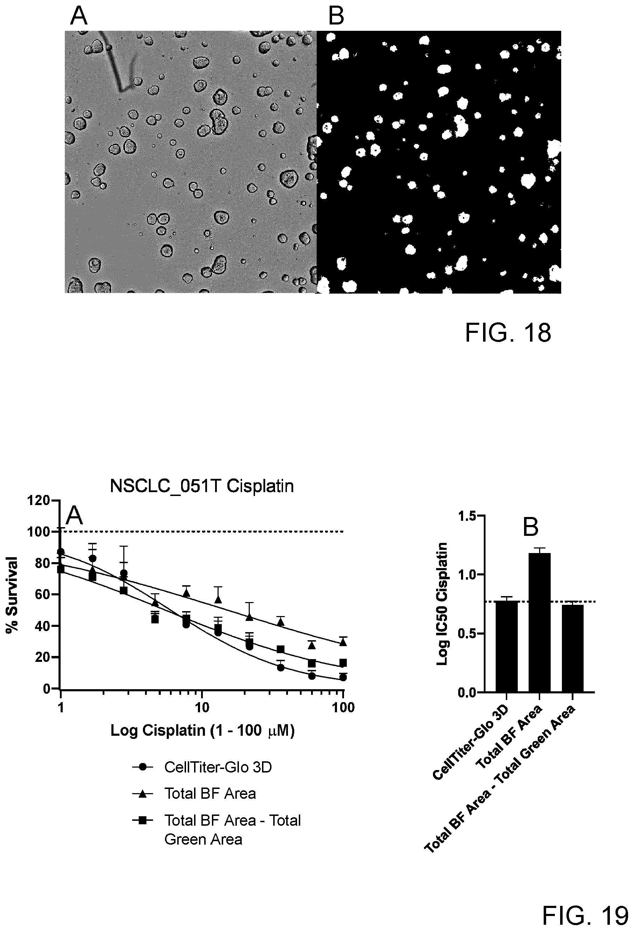

A second test sample contained three organoid lines (NSCLC_051T, NSCLC_051N and NSCLC_050N; 500/well plated as 2-day old organoids) treated with a 10-point titration of cisplatin, prepared as described above. A test sample contained organoids and no fluorescent label. A control sample contained organoids labelled using Hoechst fluorescence (Hoechst 33342 (blue)). The Brightfield images (test sample) and the Hoechst fluorescence images (control sample) were captured by the Tecan Spark Cyto. The Brightfield image was processed using the method described herein, and the trained PM output were primary output images (252). These were compared with the fluorescent images. Pairwise comparison (FIG. 10) showed a strong correlation with cytotoxicity from the cisplatin treatment of the organoid (c-object) Count **(FIG. 10A),** Mean Area **(FIG. 10B),** and Total Area **(FIG. 10C)** detected in the primary output image when compared to Hoechst fluorescence image. Common artefacts (air-bubbles, extracellular matrix, dust, fibres) did not disrupt the processing **(FIGs. 18A** and **B).**

Using the gold-standard CellTiter-Glo 3D viability assay as a reference, it was determined that analysis of the primary output (BF) images (252) accurately monitors viability and therapy response in PDOs. Pairwise comparison showed the total c-object area to correlate well with the CellTiter-Glo 3D luminescent signal, since both parameters result from whole-well readouts (FIG. 11) (=4A original). The assay quality was assessed based on the Z-factor using 100 $\mu$M cisplatin as positive control for NSCLC_051T. Pairwise comparison **(FIG. 11A)** showed a strong correlation with organoid (c-object) Count **(FIG. 11A),** Mean Area **(FIG. 11B)**, and Total Area **(FIG. 11C)** highlighted in the primary output image when compared to CellTiter-Glo 3D read-out.

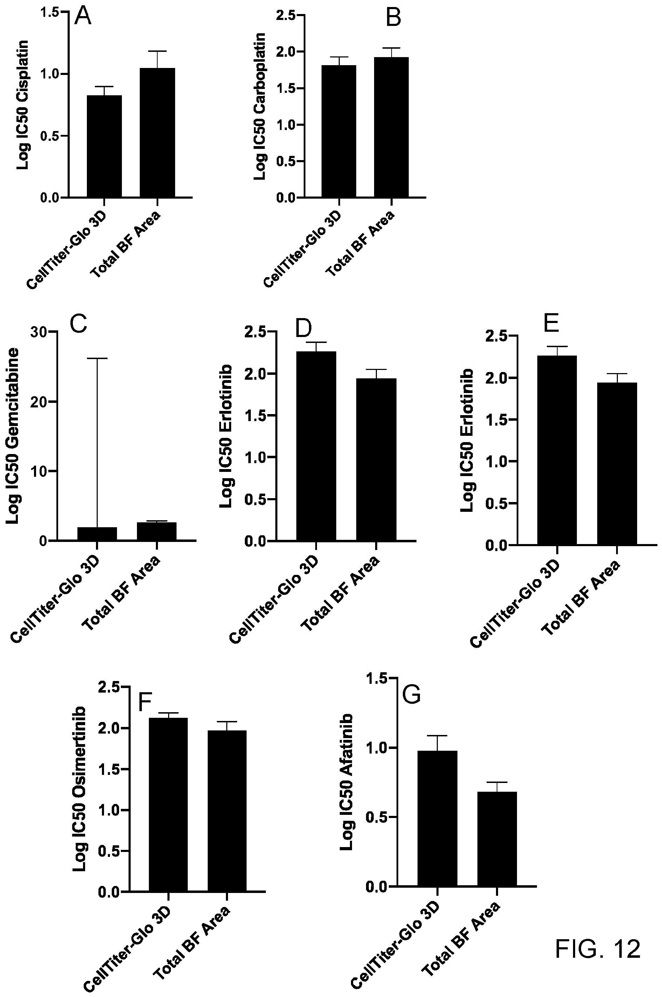

A drug screen for seven standard-of-care lung cancer treatments (cisplatin, carboplatin, gemcitabine, erlotinib, gefitinib, osimertinib or afatinib) on an independent PDO line (NSCLC_013T) that the predictive model had not been trained on. Staurosporine (1 $\mu$M) was used as a standardized 100% cell death control. As shown in **FIG. 12A** to **G,** a correspondence of IC50 values was observed between the (total area highlighted c-objects) and CellTiter-Glo 3D assay. For gemcitabine, the total c-object area resulted in a strong fit of the data.

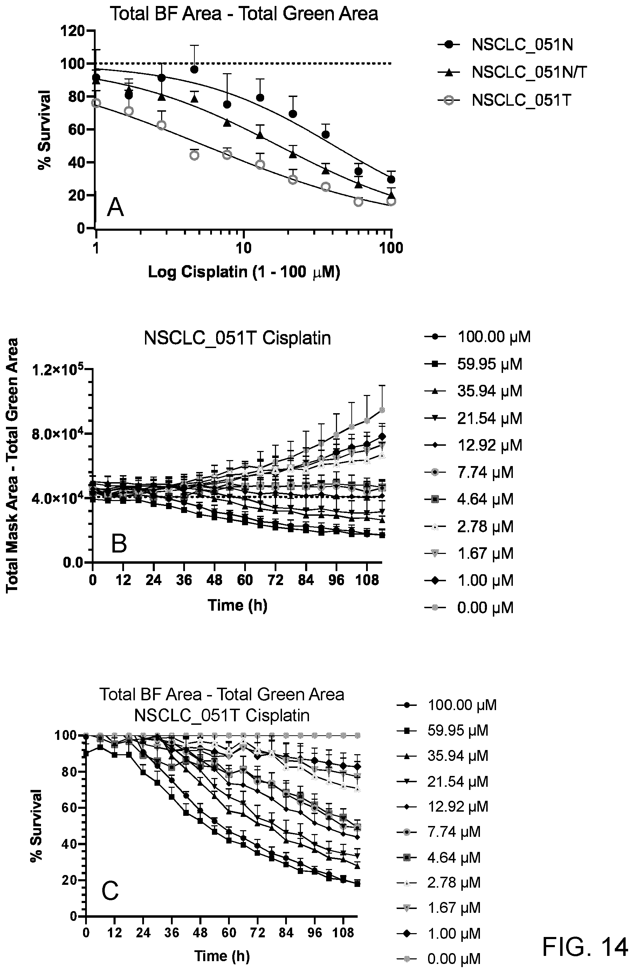

A fluorescent cell death marker (Cytotox Green or equivalent) in the test sample was used to correct for the area covered by dead entities e.g. at high concentration of potential active agent. The parameter Total Area highlighted c-objects - Total Fluorescent Area was used. The parameter was characterized by a Z-factor of 0.80 for the NSCLC_051T line and both the dose-response curves and IC50-values showed an improved overlap with the CellTiter-Glo 3D assay for NSCLC_051T **(FIGs. 19A** and **B).** The parameter showed a clear distinction in sensitivity between the NSCLC_051T, 051N/T and 051N lines **(FIG. 14A).** In addition, this parameter allowed for real-time monitoring of cell viability **(FIG. 14B)** or vehicle normalized survival **(FIG. 14C)** which allows for early detection of therapy response.

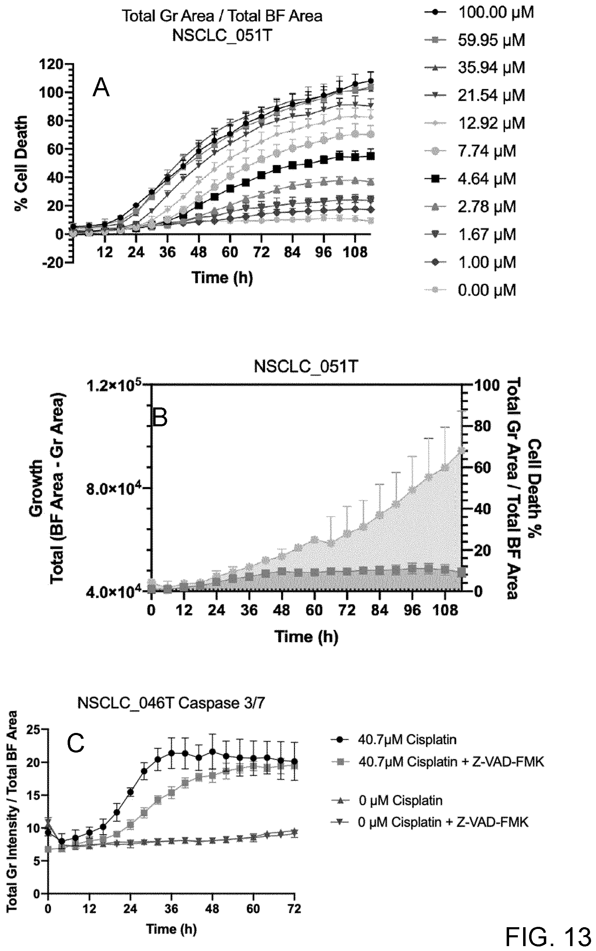

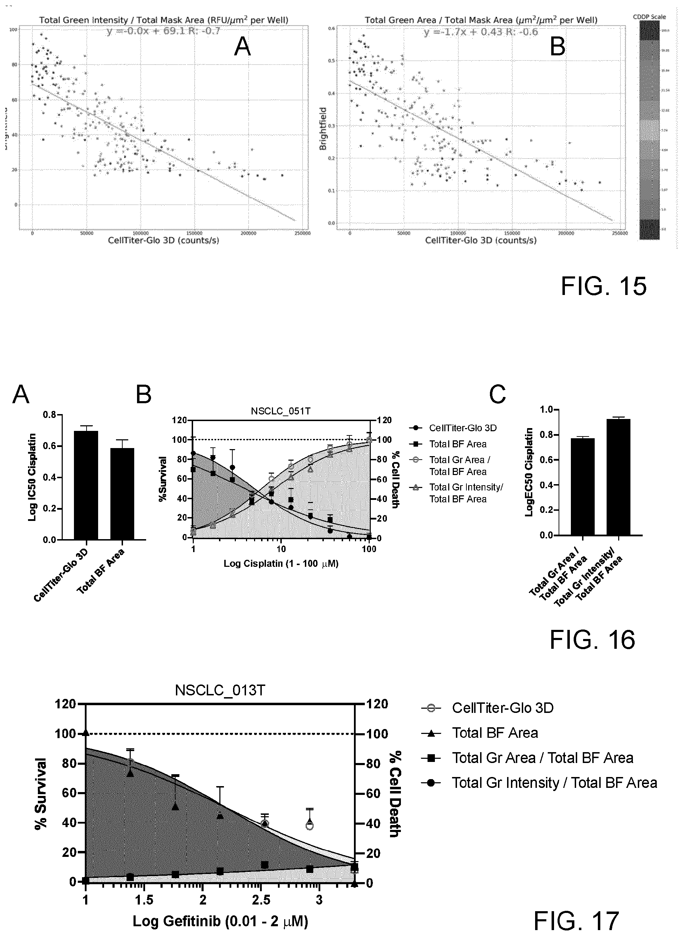

Fluorescent/Brightfield imaging was used to distinguish a cytostatic response (i.e. growth arrest) from a cytotoxic response (i.e. cell death). The amount of therapy induced cell death was quantified. Pairwise comparison showed an inverse correlation of Total Fluorescent Area and Total Fluorescent Intensity normalized to (Total Area Highlighted c-objects) with the CellTiter-Glo 3D readout (**FIGs**. **15A** and **B**). The assay quality was assessed based on the Z-factor using 100 $\mu$M cisplatin as positive control for NSCLC_051T. Total Fluorescent Area / (Total Area Highlighted c-objects), and Total Fluorescent Intensity / (Total Area Highlighted c-objects) were characterized by a Z-factor of 0.71 and 0.75, respectively, consistent with a robust assay. A clear inverse relation was observed for the inhibitory dose-response curve (% survival) and stimulatory dose-response curve of both the Total Fluorescence Area and Intensity parameters normalized to (Total Area Highlighted c-objects) (% cell death) for cisplatin treated NSCLC_051T PDOs, suggesting a cytotoxic response in this organoid line **(FIGs. 16A** to **C).** An example of a cytostatic response is given for NSCLC_013T treated with gefitinib **(FIGs. 17).** In addition, these parameters allow for real-time monitoring of cell death **(FIG. 13A),** internal quality control of organoid health **(FIG. 13B)** and studying types of cell death more in depth (*e.g.* apoptosis) **(FIG. 13C).**

**Claims**

1. A training method (100) for training a predictive model, PM, (132) for highlighting cellular objects, c-objects, in a test Brightfield, BF, image of a test sample (202) that is a cell culture of one or more c-objects acquired using a test microscope (204) having at least a BF acquisition mode, the training method (100) comprising:

   - receiving a plurality of training data sets (120), wherein:

      - each training data set (120) has been captured from a training sample (102) that is a cell culture comprising one or more c-objects having been labelled with one or more fluorescent labels (L, M);
      - each training data set (110) comprises a training BF image (112, 112') of the training sample (102) and training c-object data (124) of the training sample (102),
      - the training c-object data (124) is generated automatically from one or more training fluorescent images (114, 114');
      - both the training BF image (112, 112') and one or more training fluorescent images (114, 114') have been captured in an image acquisition event (110) of a training microscope (104) having a BF imaging mode and a fluorescent imaging mode;

- training (130) the PM (132), wherein:

- an input to the PM (132) is the training BF image (122) of the data training set (120), and an output of the PM (132) is a processed training BF image data (134);
- the processed training BF image data (134) is compared with the training c-object data (124) of the training data set (120), and
- the PM (132) is adjusted so that the outputted processed training BF image data (134) approaches the training c-object data (124) of the training set (120).

2.  The training method (100) according to claim 1, wherein:

- the one or more c-objects in training sample (102) have been labelled with a live cell fluorescence label (L) and the training c-object data (124) comprises the training fluorescent image (114, 114') of the live cell fluorescence labelled (L) c-objects acquired during the acquisition event (110)

3.  The training method (100) according to claim 1 or 2, wherein:

- the one or more c-objects in the training sample (102) have been labelled with a live cell fluorescence label (L) and at least one morphological fluorescence label (M), and
- training c-object data (124) comprises:

- a training fluorescent image (114A) of the live cell fluorescence labelled (L) c-objects, acquired during the acquisition event (110)
- c-object parameter labels (114B', 114C' 114D') generated from a training fluorescent image (114B, 114C, 114D) of the morphological fluorescence labelled (M) c-objects, acquired during the acquisition event (110)

4.  A processing method (200) for highlighting one or more cellular objects, c-objects, in a test Brightfield, BF, image (212), comprising:

- receiving test image data (220) containing the test BF image (212, 212') of a test sample (202) that is a cell culture containing the one or more c-objects acquired during an acquisition event (210) by a test microscope (204) in BF acquisition mode;
- using the test image data (220) as an input to a trained predictive model, PM (240), trained according to the training method according to any one of claims 1 to 3;
- outputting a trained PM output (250) from the trained PM (240), comprising a primary output image (252) in which c-objects of the test image (212) are highlighted.

5.  A processing method (200) for highlighting one or more cellular objects, c-objects, and providing an indication of a c-object state in a test Brightfield, BF, image (212), comprising:

- receiving a test image data (220) containing the test BF image (212, 212') of a test sample (202) that is a cell culture acquired during an acquisition event (210) by a test microscope (204) in BF acquisition mode;
- using the test image data (220) as an input to a trained predictive model (PM) (240), trained according to the training method according to claim 3,
- outputting a trained PM output (250) comprising a primary output image (252) in which c-objects of the test image (212) are highlighted, and one or more c-object parameter channels (256) indicative of the c-object state.

6.  A method for determining one or more characterising parameters (270) of one or more cellular objects, c-objects, in test sample (202) that is a cell culture, comprising:

- carrying out the method according to claim 4 or 5 on the test sample (202)
- from the primary output image (252), determining the one or more characterising parameters (270) that are primary characterising parameters (272) including one or more of: c-object count, c-object location, c-object orientation, c-object shape, area of an individual c-object, mean area of a c-object, total area of all c-objects, intensity of an individual c-object, mean intensity of a c-object, and total c-object intensity all c-objects.

7.  A method for determining one or more characterising parameters (270) of one or more cellular objects, c-objects, in test sample (202) that is a cell culture, comprising:

- carrying out the method according to claim 5 on the test sample (202);
- from the one or more c-object parameter channels (256), determining the one or more characterising parameters (270) that are specific characterising parameters (274) including c-object state.

8. An assay for determining viability of a population of one or more c-objects that are single cells and/or assemblies of cells in a test sample (202) that is a cell culture, comprising:
performing the processing method (200) according to claims 4 or 5 to obtain a primary output image (252), and

- determining the viability from the count or total or mean area of highlighted c-objects in the primary output image (252).

9. An assay for determining growth of viable c-objects of a population of one or more c-objects that are assemblies of cells in a test sample (202) that is a cell culture, comprising:

- receiving, at multiple time points, at least one test BF image (212) and at least one test fluorescence image (214, 214') of the test sample (202) captured in an acquisition event by a test microscope (204) having at least a Brightfield acquisition mode and a fluorescence imaging mode, wherein the test sample (202) has been contacted with a morphological fluorescent label for cell death;
- processing the at least one test BF image (212) according to a processing method (200) according to claim 5 to obtain the primary output image (252),
- determining from the primary output image (252) a total or mean area of highlighted c-objects at each time point;
- determining from the test fluorescence image (214, 214') a total area or mean area or individual area of c-objects occupied by the fluorescence at each time point;
- determining growth of viable c-objects from a total area or mean area or individual area of the highlighted c-objects in the primary output image (252) minus a total or mean area of highlighted c-objects emitted by the c-objects in the test fluorescence image (214, 214') as a function of time.

10. An assay for determining velocity of c-objects of a population of one or more c-objects that are single cells and/or assemblies of cells in a test sample (202) that is a cell culture, comprising:

- receiving, at multiple time points, at least one test BF image (212) of the test sample (202) each acquired by a test microscope (204) having at least a Brightfield acquisition mode,
- processing the at least one test BF images (212) according to a processing method (200) according to claim 4 or 5 to obtain the primary output image (252) at the multiple time points,
- tracking over the multiple time points movement of highlighted c-objects (254) in the primary output images (252); and
- determining from the distance moved by the highlighted c-objects (254) over time, the velocity of the c-objects in the test sample (202).

11. An assay for determining fusion of c-objects of a population of one or more c-objects that are single cells and/or assemblies of cells in a test sample (202) that is a cell culture, comprising:

- receiving, at multiple time points, at least one test BF image (212) of the test sample (202) each acquired by a test microscope (204) having at least a Brightfield acquisition mode,
- processing the at least one test BF images (212) according to a processing method (200) according to claim 4 or 5 to obtain the primary output image (252) at the multiple time points,
- tracking over the multiple time points movement of highlighted c-objects (254) in the primary output images (252); and
- determining from the movement paths of the highlighted c-objects (254) over time, the fusion of c-objects in the test sample (202).

12. An assay for determining splitting of c-objects of a population of one or more c-objects that are single cells and/or assemblies of cells in a test sample (202) that is a cell culture, comprising:

- receiving, at multiple time points, at least one test BF image (212) of the test sample (202) each acquired by a test microscope (204) having at least a Brightfield acquisition mode,
- processing the at least one test BF images (212) according to a processing method (200) according to claim 4 or 5 to obtain the primary output image (252) at the multiple time points,

- tracking over the multiple time points movement of highlighted c-objects (254) in the primary output images (252); and
- determining from the movement paths of the highlighted c-objects (254) over time, the splitting of c-objects in the test sample (202).

13. A screening method for determining an effect of one or more potential active agents on a test sample (202) that is a cell culture containing a population of one or more c-objects that are single cells and/or assemblies of cells comprising:

- carrying out an assay according to any one of claims 8 to 12 on a plurality of test samples (202), wherein at least one of the test samples (202) contains the c-objects and is absent of potential active agent, and at least one of the test samples contains the c-objects and the one or more potential active agents;
- determining, by comparing the assays of the different test samples (202), an effect of the one or more potential active agent.

14. A screening method for determining a resistance to a therapeutic effect of one or more potential active agents on a test sample (202) that is a cell culture containing a population of one or more c-objects that are assemblies of cells comprising:

- carrying out a growth assay according to claim 9 on a plurality of test samples (202), wherein at least one of the test samples contains the c-objects and the one or more potential active agents;
- identifying from the assay, resistant c-objects in the test sample (202), wherein a resistant c-object has a different individual growth compared with a mean growth of the test sample.

**Patentansprüche**

1. Trainingsverfahren (100) zum Trainieren eines vorhersagenden Modells, PM, (132) zum Markieren von zellulären Objekten, c-Objekten, in einem Hellfeld(BF)-Testbild einer Testprobe (202), bei der es sich um eine Zellkultur von einem oder mehreren c-Objekten handelt, die unter Verwendung eines Testmikroskops (204) erfasst werden, das mindestens einen BF-Erfassungsmodus aufweist, wobei das Trainingsverfahren (100) Folgendes umfasst:

- Empfangen einer Vielzahl von Trainingsdatensätzen (120), wobei:

- jeder Trainingsdatensatz (120) aus einer Trainingsprobe (102) erlangt wurde, die eine Zellkultur ist, die eine oder mehrere c-Objekte umfasst, die mit einem oder mehreren fluoreszierenden Kennzeichen (L, M) gekennzeichnet wurden;
- jeder Trainingsdatensatz (110) ein BF-Trainingsbild (112, 112') der Trainingsprobe (102) und c-Objekttrainingsdaten (124) der Trainingsprobe (102) umfasst,
- die c-Objekttrainingsdaten (124) aus einem oder mehreren fluoreszierenden Trainingsbildern (114, 114') automatisch erzeugt werden;
- sowohl das BF-Trainingsbild (112, 112') als auch ein oder mehrere fluoreszierende Trainingsbilder (114, 114') in einem Bilderfassungsereignis (110) eines Trainingsmikroskops (104) erlangt wurden, das einen BF-Bildgebungsmodus und einen fluoreszierenden Bildgebungsmodus aufweist;
- Trainieren (130) des PM (132), wobei:

- eine Eingabe in das PM (132) das BF-Trainingsbild (122) des Trainingsdatensatzes (120) ist und eine Ausgabe vom PM (132) verarbeitete BF-Trainingsbilddaten (134) sind;
- die verarbeiteten BF-Trainingsbilddaten (134) mit den c-Objekttrainingsdaten (124) des Trainingsdatensatzes (120) verglichen werden; und
- das PM (132) derart angepasst wird, dass sich die ausgegebenen verarbeiteten BF-Trainingsbilddaten (134) den c-Objekttrainingsdaten (124) des Trainingssatzes (120) annähern.

2. Trainingsverfahren (100) nach Anspruch 1, wobei:

- die einen oder mehreren c-Objekte in einer Trainingsprobe (102) mit einem fluoreszierenden Frischzellenkennzeichen (L) gekennzeichnet wurden und die c-Objekttrainingsdaten (124) das fluoreszierende Trainingsbild (114, 114') der fluoreszierenden Frischzellengekennzeichneten (L) c-Objekte umfassen, die während des Erfassungsereignisses (110) erfasst wurden.

3. Trainingsverfahren (100) nach Anspruch 1 oder 2, wobei:

- die einen oder mehreren c-Objekte in der Trainingsprobe (102) mit einem fluoreszierenden Frischzellenkennzeichen (L) und mindestens einem morphologischen fluoreszierenden Kennzeichen (M) gekennzeichnet wurden; und
- c-Objekttrainingsdaten (124) Folgendes umfassen:

- ein fluoreszierendes Trainingsbild (114A) der fluoreszierenden Frischzellengekennzeichneten (L) c-Objekte, die während des Erfassungsereignisses (110) erfasst wurden
- c-Objektparameterkennzeichen (114B', 114C', 114D'), die aus einem fluoreszierenden Trainingsbild (114B, 114C, 114D) der morphologischen fluoreszierenden gekennzeichneten (M) c-Objekte erzeugt werden, die während des Erfassungsereignisses (110) erfasst wurden.

4. Verarbeitungsverfahren (200) zum Markieren von einem oder mehreren zellulären Objekten, c-Objekten, in einem Hellfeld(BF)-Testbild (212), das Folgendes umfasst:

- Empfangen von Testbilddaten (220), die das BF-Testbild (212, 212') einer Testprobe (202) enthalten, bei der es sich um eine Zellkultur handelt, die die einen oder mehreren c-Objekte enthalten, die während eines Erfassungsereignisses (210) von einem Testmikroskop (204) im BF-Erfassungsmodus erfasst wurden;
- Verwenden der Testbilddaten (220) als eine Eingabe in ein trainiertes vorhersagendes Modell, PM (240), das gemäß dem Trainingsverfahren nach einem der Ansprüche 1 bis 3 trainiert wurde;
- Ausgeben einer trainierten PM-Ausgabe (250) aus dem trainierten PM (240), die ein primäres Ausgabebild (252) umfasst, in der c-Objekte des Testbildes (212) markiert sind.

5. Verarbeitungsverfahren (200) zum Markieren von einem oder mehreren zellulären Objekten, c-Objekten, und Bereitstellen einer Anzeige eines c-Objektzustands in einem Hellfeld(BF)-Testbild (212), das Folgendes umfasst:

- Empfangen von Testbilddaten (220), die das BF-Testbild (212, 212') einer Testprobe (202) enthalten, bei der es sich um eine Zellkultur handelt, die während des Erfassungsereignisses (210) von einem Testmikroskop (204) im BF-Erfassungsmodus erfasst wurden;
- Verwenden der Testbilddaten (220) als eine Eingabe in ein trainiertes vorhersagendes Modell (PM) (240), das gemäß dem Trainingsverfahren nach Anspruch 3 trainiert wurde,
- Ausgeben einer trainierten PM-Ausgabe (250), die ein primäres Ausgabebild (252), in der c-Objekte des Testbildes (212) markiert sind, und einen oder mehrere c-Objektparameterkanäle (256), die den c-Objektzustand anzeigen, umfasst.

6. Verfahren zum Bestimmen von einem oder mehreren charakterisierenden Parametern (270) von einem oder mehreren zellulären Objekten, c-Objekten, in einer Testprobe (202), bei der es sich um eine Zellkultur handelt, das Folgendes umfasst:

- Umsetzen des Verfahrens nach Anspruch 4 oder 5 an der Testprobe (202)
- Bestimmen der einen oder mehreren charakterisierenden Parameter (270), die primäre charakterisierende Parameter (272) sind, die eines oder mehrere der Folgendes beinhalten: c-Objektzählung, c-Objektlage, c-Objektausrichtung, c-Objektform, Bereich eines einzelnen c-Objekts, Mittelbereich eines c-Objekts, Gesamtbereich aller c-Objekte, Intensität eines einzelnen c-Objekts, Mittelintensität eines c-Objekts und c-Objektgesamtintensität aller c-Objekte, anhand des primären Ausgabebildes (252).

7. Verfahren zum Bestimmen von einem oder mehreren charakterisierenden Parametern (270) von einem oder mehreren zellulären Objekten, c-Objekten, in einer Testprobe (202), bei der es sich um eine Zellkultur handelt, das Folgendes umfasst:

- Umsetzen des Verfahrens nach Anspruch 5 an der Testprobe (202);
- Bestimmen der einen oder mehreren charakterisierenden Parameter (270), die spezifische charakterisierende Parameter (274) sind, die c-Objektzustand beinhalten, anhand der einen oder mehreren c-Objektparameterkanäle (256).

8. Prüfung zum Bestimmen von Lebensfähigkeit einer Population von einem oder mehreren c-Objekten, die einzelne Zellen und/oder Anordnungen von Zellen in einer Testprobe (202) sind, bei der es sich um eine Zellkultur handelt, die Folgendes umfasst:

- Durchführen des Verarbeitungsverfahrens (200) nach Anspruch 4 oder 5, um ein primäres Ausgabebild (252) zu erhalten, und
- Bestimmen der Lebensfähigkeit anhand der Zählung oder des Gesamt- oder des Mittelbereichs von markierten c-Objekten im primären Ausgabebild (252).

**9.** Prüfung zum Bestimmen von Wachstum von lebensfähigen c-Objekten einer Population von einem oder mehreren c-Objekten, die Anordnungen von Zellen in einer Testprobe (202) sind, bei der es sich um eine Zellkultur handelt, die Folgendes umfasst:

- Empfangen von mindestens einem BF-Testbild (212) und mindestens einem fluoreszierenden Testbild (214, 214') der Testprobe (202), die in einem Erfassungsereignis von einem Testmikroskop (204) erlangt wurde, das mindestens einen Hellfelderfassungsmodus und einen fluoreszierenden Bildgebungsmodus aufweist, zu mehreren Zeitpunkten, wobei die Testprobe (202) mit einem morphologischen fluoreszierenden Zelltod-Kennzeichen in Kontakt gebracht wurde;
- Verarbeiten des mindestens einen BF-Testbildes (212) gemäß einem Verarbeitungsverfahren (200) nach Anspruch 5, um das primäre Ausgabebild (252) zu erhalten,
- Bestimmen eines Gesamt- oder Mittelbereichs von markierten c-Objekten zu jedem Zeitpunkt anhand des primären Ausgabebildes (252);
- Bestimmen eines Gesamtbereichs oder Mittelbereichs oder einzelnen Bereichs von c-Objekten, der durch die Fluoreszenz belegt ist, zu jedem Zeitpunkt anhand des fluoreszierenden Testbildes (214, 214');
- Bestimmen von Wachstum von lebensfähigen c-Objekten anhand eines Gesamtbereichs oder Mittelbereichs oder einzelnen Bereichs der markierten c-Objekte im primären Ausgabebild (252) minus einem Gesamt- oder Mittelbereich von markierten c-Objekten, die von den c-Objekten im fluoreszierenden Testbild (214, 214') emittiert wurde, in Abhängigkeit von Zeit.

**10.** Prüfung zum Bestimmen von Geschwindigkeit von c-Objekten einer Population von einem oder mehreren c-Objekten, die einzelne Zellen und/oder Anordnungen von Zellen in einer Testprobe (202) sind, bei der es sich um eine Zellkultur handelt, die Folgendes umfasst:

- Empfangen von mindestens einem BF-Testbild (212) der Testprobe (202), von denen jedes von einem Testmikroskop (204) erfasst wurde, das mindestens einen Hellfelderfassungsmodus aufweist, zu mehreren Zeitpunkten,
- Verarbeiten des mindestens einen BF-Testbild (212) gemäß einem Verarbeitungsverfahren (200) nach Anspruch 4 oder 5, um das primäre Ausgabebild (252) zu den mehreren Zeitpunkten, zu erhalten,
- Verfolgen einer Bewegung von markierten c-Objekten (254) in den primären Ausgabebildern (252) über die mehreren Zeitpunkte; und
- Bestimmen der Geschwindigkeit der c-Objekte in der Testprobe (202) anhand des Abstands, über den sich die markierten c-Objekte (254) über die Zeit bewegt haben.

**11.** Prüfung zum Bestimmen einer Verschmelzung von c-Objekten einer Population von einem oder mehreren c-Objekten, die einzelne Zellen und/oder Anordnungen von Zellen in einer Testprobe (202) sind, bei der es sich um eine Zellkultur handelt, die Folgendes umfasst:

- Empfangen von mindestens einem BF-Testbild (212) der Testprobe (202), von denen jedes von einem Testmikroskop (204) erfasst wurde, das mindestens einen Hellfelderfassungsmodus aufweist, zu mehreren Zeitpunkten,
- Verarbeiten der mindestens einen BF-Testbilder (212) gemäß einem Verarbeitungsverfahren (200) nach Anspruch 4 oder 5, um das primäre Ausgabebild (252) zu den mehreren Zeitpunkten, zu erhalten,
- Verfolgen einer Bewegung von markierten c-Objekten (254) in den primären Ausgabebildern (252) über die mehreren Zeitpunkte; und
- Bestimmen der Verschmelzung von c-Objekten in der Testprobe (202) anhand des Bewegungspfades der markierten c-Objekte (254) über die Zeit.

**12.** Prüfung zum Bestimmen von Aufteilung von c-Objekten einer Population von einem oder mehreren c-Objekten, die einzelne Zellen und/oder Anordnungen von Zellen in einer Testprobe (202) sind, bei der es sich um eine Zellkultur handelt, die Folgendes umfasst:

- Empfangen von mindestens einem BF-Testbild (212) der Testprobe (202), von denen jedes von einem Testmikroskop (204) erfasst wurde, das mindestens einen Hellfelderfassungsmodus aufweist, zu mehreren Zeitpunkten,
- Verarbeiten der mindestens einen BF-Testbilder (212) gemäß einem Verarbeitungsverfahren (200) nach Anspruch 4 oder 5, um das primäre Ausgabebild (252) zu den mehreren Zeitpunkten, zu erhalten,
- Verfolgen einer Bewegung von markierten c-Objekten (254) in den primären Ausgabebildern (252) über die mehreren Zeitpunkte; und
- Bestimmen der Aufteilung von c-Objekten in der Testprobe (202) anhand des Bewegungspfades der markierten c-Objekte (254) über die Zeit.

13. Screeningverfahren zum Bestimmen einer Auswirkung von einem oder mehreren potenziellen aktiven Mitteln auf eine Testprobe (202), bei der es sich um eine Zellkultur handelt, die eine Population von einem oder mehreren c-Objekten enthält, die einzelne Zellen und/oder Anordnungen von Zellen sind, das Folgendes umfasst:

- Umsetzen einer Prüfung nach einem der Ansprüche 8 bis 12 an einer Vielzahl von Testproben (202), wobei mindestens eine der Testproben (202) die c-Objekte und kein potenzielles aktives Mittel enthält und mindestens eine der Testproben die c-Objekte und die einen oder mehreren potenziellen aktiven Mittel enthält;
- Bestimmen einer Auswirkung der einen oder mehreren potenziellen aktiven Mittel durch Vergleichen der Prüfungen der verschiedenen Testproben (202).

14. Screeningverfahren zum Bestimmen einer Resistenz gegenüber einer therapeutischen Auswirkung von einem oder mehreren potenziellen aktiven Mitteln auf eine Testprobe (202), bei der es sich um eine Zellkultur handelt, die eine Population von einem oder mehreren c-Objekten enthält, die Anordnungen von Zellen sind, das Folgendes umfasst:

- Umsetzen einer Wachstumsprüfung nach Anspruch 9 an einer Vielzahl von Testproben (202), wobei mindestens eine der Testproben die c-Objekte und die einen oder mehreren potenziellen aktiven Mittel enthält;
- Identifizieren von resistenten c-Objekten in der Testprobe (202) anhand der Prüfung, wobei ein resistentes c-Objekt, verglichen mit einem mittleren Wachstum der Testprobe, ein anderes einzelnes Wachstum aufweist.

## Revendications

1. Procédé d'entraînement (100) pour entraîner un modèle prédictif, PM, (132) pour mettre en évidence des objets cellulaires, objets c, dans une image en fond clair, BF, de test d'un échantillon de test (202) qui est une culture cellulaire d'un ou plusieurs objets c acquise à l'aide d'un microscope de test (204) ayant au moins un mode d'acquisition BF, le procédé d'entraînement (100) comprenant :

- la réception d'une pluralité d'ensembles de données d'entraînement (120), dans lequel :

- chaque ensemble de données d'entraînement (120) a été capturé à partir d'un échantillon d'entraînement (102) qui est une culture cellulaire comprenant un ou plusieurs objets c ayant été étiquetés avec une ou plusieurs étiquettes fluorescentes (L, M) ;
- chaque ensemble de données d'entraînement (110) comprend une image BF d'entraînement (112, 112') de l'échantillon d'entraînement (102) et des données d'objet c d'entraînement (124) de l'échantillon d'entraînement (102),
- les données d'objet c d'entraînement (124) sont générées automatiquement à partir d'une ou plusieurs images fluorescentes d'entraînement (114, 114') ;
- à la fois l'image BF d'entraînement (112, 112') et une ou plusieurs images fluorescentes d'entraînement (114, 114') ont été capturées dans un événement d'acquisition d'image (110) d'un microscope d'entraînement (104) ayant un mode d'imagerie BF et un mode d'imagerie par fluorescence ;
- l'entraînement (130) du PM (132), dans lequel :

- une entrée dans le PM (132) est l'image BF d'entraînement (122) de l'ensemble d'entraînement de données (120), et une sortie du PM (132) est des données d'image BF d'entraînement traitées (134) ;
- les données d'image BF d'entraînement traitées (134) sont comparées avec les données d'objet c d'entraînement (124) de l'ensemble de données d'entraînement (120), et
- le PM (132) est ajusté de sorte que les données d'image BF d'entraînement traitées (134) émises se rapprochent des données d'objet c d'entraînement (124) de l'ensemble d'entraînement (120).

**2.** Procédé d'entraînement (100) selon la revendication 1, dans lequel :

- les un ou plusieurs objets c dans l'échantillon d'entraînement (102) ont été étiquetés avec une étiquette de fluorescence de cellule vivante (L) et les données d'objet c d'entraînement (124) comprennent l'image fluorescente d'entraînement (114, 114') des objets c étiquetés par fluorescence de cellule vivante (L) acquise pendant l'événement d'acquisition (110).

**3.** Procédé d'entraînement (100) selon la revendication 1 ou 2, dans lequel :

- les un ou plusieurs objets c dans l'échantillon d'entraînement (102) ont été étiquetés avec une étiquette de fluorescence de cellule vivante (L) et au moins une étiquette de fluorescence morphologique (M), et
- des données d'objet c d'entraînement (124) comprennent :

    - une image fluorescente d'entraînement (114A) des objets c étiquetés par fluorescence de cellule vivante (L), acquise pendant l'événement d'acquisition (110)
    - des étiquettes de paramètre d'objet c (114B', 114C' 114D') générées à partir d'une image fluorescente d'entraînement (114B, 114C, 114D) des objets c étiquetés par fluorescence morphologique (M), acquise pendant l'événement d'acquisition (110).

**4.** Procédé de traitement (200) pour mettre en évidence un ou plusieurs objets cellulaires, objets c, dans une image en fond clair, BF, de test (212), comprenant :

    - la réception de données d'image de test (220) contenant l'image BF de test (212, 212') d'un échantillon de test (202) qui est une culture cellulaire contenant les un ou plusieurs objets c acquise pendant un événement d'acquisition (210) par un microscope de test (204) en mode d'acquisition BF ;
    - l'utilisation des données d'image de test (220) en tant qu'entrée dans un modèle prédictif, PM (240) entraîné, entraîné selon le procédé d'entraînement selon l'une quelconque des revendications 1 à 3 ;
    - l'émission d'une sortie de PM entraîné (250) à partir du PM (240) entraîné, comprenant une image de sortie primaire (252) dans laquelle des objets c de l'image de test (212) sont mis en évidence.

**5.** Procédé de traitement (200) pour mettre en évidence un ou plusieurs objets cellulaires, objets c, et fournir une indication d'un état d'objet c dans une image en fond clair, BF, de test (212), comprenant :

    - la réception de données d'image de test (220) contenant l'image BF de test (212, 212') d'un échantillon de test (202) qui est une culture cellulaire acquise pendant un événement d'acquisition (210) par un microscope de test (204) en mode d'acquisition BF ;
    - l'utilisation des données d'image de test (220) en tant qu'entrée dans un modèle prédictif (PM) (240) entraîné, entraîné selon le procédé d'entraînement selon la revendication 3,
    - l'émission d'une sortie de PM entraîné (250) comprenant une image de sortie primaire (252) dans laquelle des objets c de l'image de test (212) sont mis en évidence, et un ou plusieurs canaux de paramètre d'objet c (256) indicatifs de l'état d'objet c.

**6.** Procédé de détermination d'un ou plusieurs paramètres de caractérisation (270) d'un ou plusieurs objets cellulaires, objets c, dans un échantillon de test (202) qui est une culture cellulaire, comprenant :

    - la réalisation du procédé selon la revendication 4 ou 5 sur l'échantillon de test (202)
    - à partir de l'image de sortie primaire (252), la détermination des un ou plusieurs paramètres de caractérisation (270) qui sont des paramètres de caractérisation primaires (272) incluant un ou plusieurs de : un nombre d'objets c, un emplacement d'objet c, une orientation d'objet c, une forme d'objet c, une surface d'un objet c individuel, une surface moyenne d'un objet c, une surface totale de tous les objets c, une intensité d'un objet c individuel, une intensité moyenne d'un objet c, et une intensité d'objet c totale de tous les objets c.

**7.** Procédé de détermination d'un ou plusieurs paramètres de caractérisation (270) d'un ou plusieurs objets cellulaires, objets c, dans un échantillon de test (202) qui est une culture cellulaire, comprenant :

    - la réalisation du procédé selon la revendication 5 sur l'échantillon de test (202) ;
    - à partir des un ou plusieurs canaux de paramètre d'objet c (256), la détermination des un ou plusieurs paramètres de caractérisation (270) qui sont des paramètres de caractérisation spécifiques (274) incluant l'état d'objet c.

8. Essai pour déterminer la viabilité d'une population d'un ou plusieurs objets c qui sont des cellules uniques et/ou des assemblées de cellules dans un échantillon de test (202) qui est une culture cellulaire, comprenant :

- la performance du procédé de traitement (200) selon les revendications 4 ou 5 pour obtenir une image de sortie primaire (252), et
- la détermination de la viabilité à partir du nombre ou de la surface totale ou moyenne d'objets c mis en évidence dans l'image de sortie primaire (252).

9. Essai pour déterminer la croissance d'objets c viables d'une population d'un ou plusieurs objets c qui sont des assemblées de cellules dans un échantillon de test (202) qui est une culture cellulaire, comprenant :

- la réception, à de multiples points temporels, d'au moins une image BF de test (212) et d'au moins une image par fluorescence de test (214, 214') de l'échantillon de test (202) capturées dans un événement d'acquisition par un microscope de test (204) ayant au moins un mode d'acquisition en fond clair et un mode d'imagerie par fluorescence, dans lequel l'échantillon de test (202) a été mis en contact avec une étiquette fluorescente morphologique pour la mort cellulaire ;
- le traitement de l'au moins une image BF de test (212) selon un procédé de traitement (200) selon la revendication 5 pour obtenir l'image de sortie primaire (252),
- la détermination à partir de l'image de sortie primaire (252) d'une surface totale ou moyenne d'objets c mis en évidence à chaque point temporel ;
- la détermination à partir de l'image par fluorescence de test (214, 214') d'une surface totale ou d'une surface moyenne ou d'une surface individuelle d'objets c occupée par la fluorescence à chaque point temporel ;
- la détermination de la croissance d'objets c viables à partir d'une surface totale ou d'une surface moyenne ou d'une surface individuelle des objets c mis en évidence dans l'image de sortie primaire (252) moins une surface totale ou moyenne d'objets c mis en évidence émise par les objets c dans l'image par fluorescence de test (214, 214') en fonction du temps.

10. Essai pour déterminer la vitesse d'objets c d'une population d'un ou plusieurs objets c qui sont des cellules uniques et/ou des assemblées de cellules dans un échantillon de test (202) qui est une culture cellulaire, comprenant :

- la réception, à de multiples points temporels, d'au moins une image BF de test (212) de l'échantillon de test (202) acquise chacune par un microscope de test (204) ayant au moins un mode d'acquisition en fond clair,
- le traitement de l'au moins une image BF de test (212) selon un procédé de traitement (200) selon la revendication 4 ou 5 pour obtenir l'image de sortie primaire (252) à de multiples points temporels,
- le suivi sur les multiples points temporels du mouvement d'objets c (254) mis en évidence dans les images de sortie primaires (252) ; et
- la détermination à partir de la distance parcourue par les objets c (254) mis en évidence au fil du temps, de la vitesse des objets c dans l'échantillon de test (202).

11. Essai pour déterminer la fusion d'objets c d'une population d'un ou plusieurs objets c qui sont des cellules uniques et/ou des assemblées de cellules dans un échantillon de test (202) qui est une culture cellulaire, comprenant :

- la réception, à de multiples points temporels, d'au moins une image BF de test (212) de l'échantillon de test (202) acquise chacune par un microscope de test (204) ayant au moins un mode d'acquisition en fond clair,
- le traitement de l'au moins une image BF de test (212) selon un procédé de traitement (200) selon la revendication 4 ou 5 pour obtenir l'image de sortie primaire (252) à de multiples points temporels,
- le suivi sur les multiples points temporels du mouvement d'objets c (254) mis en évidence dans les images de sortie primaires (252) ; et
- la détermination à partir des trajets de mouvement des objets c (254) mis en évidence au fil du temps, de la fusion d'objets c dans l'échantillon de test (202).

12. Essai pour déterminer la division d'objets c d'une population d'un ou plusieurs objets c qui sont des cellules uniques et/ou des assemblées de cellules dans un échantillon de test (202) qui est une culture cellulaire, comprenant :

- la réception, à de multiples points temporels, d'au moins une image BF de test (212) de l'échantillon de test (202) acquise chacune par un microscope de test (204) ayant au moins un mode d'acquisition en fond clair,

- le traitement de l'au moins une image BF de test (212) selon un procédé de traitement (200) selon la revendication 4 ou 5 pour obtenir l'image de sortie primaire (252) à de multiples points temporels,
- le suivi sur les multiples points temporels du mouvement d'objets c (254) mis en évidence dans les images de sortie primaires (252) ; et
- la détermination à partir des trajets de mouvement des objets c (254) mis en évidence au fil du temps, de la division d'objets c dans l'échantillon de test (202).

13. Procédé de criblage pour déterminer un effet d'un ou plusieurs agents actifs potentiels sur un échantillon de test (202) qui est une culture cellulaire contenant une population d'un ou plusieurs objets c qui sont des cellules uniques et/ou des assemblées de cellules comprenant :

- la réalisation d'un essai selon l'une quelconque des revendications 8 à 12 sur une pluralité d'échantillons de test (202), dans lequel au moins l'un des échantillons de test (202) contient les objets c et est exempt d'agent actif potentiel, et au moins l'un des échantillons de test contient les objets c et les un ou plusieurs agents actifs potentiels ;
- la détermination, en comparant les essais des différents échantillons de test (202), d'un effet des un ou plusieurs agents actifs potentiels.

14. Procédé de criblage pour déterminer une résistance à un effet thérapeutique d'un ou plusieurs agents actifs potentiels sur un échantillon de test (202) qui est une culture cellulaire contenant une population d'un ou plusieurs objets c qui sont des assemblées de cellules comprenant :

- la réalisation d'un essai de croissance selon la revendication 9 sur une pluralité d'échantillons de test (202), dans lequel au moins l'un des échantillons de test contient les objets c et les un ou plusieurs agents actifs potentiels ;
- l'identification à partir de l'essai, d'objets c résistants dans l'échantillon de test (202), dans lequel un objet c résistant a une croissance individuelle différente par rapport à une croissance moyenne de l'échantillon de test.

FIG. 1

FIG. 2

FIG. 3

FIG. 4

FIG. 5

FIG. 6

Image data
(training or test)
(112, 212)

Standard
Block 1
550a
|510a
Standard
Block 2
550b
|510b
Standard
Block 3
550c
|510c
Standard
Block 4
550d
|510d

Concatenation

Final
Block
520

512a    512b    512c    512d

500   Convolution network                                    522

Processed Training BF image (134)
or
Trained PM output (250)

FIG. 7

550   Standard Block

560a
Layer 1

562a
Activation 1

560b
Layer 2

562b
Activation 2

564
Normal

FIG. 8

FIG. 9

FIG. 10

FIG. 11

FIG. 12

FIG. 13

FIG. 14

FIG. 15

FIG. 16

FIG. 17

44

FIG. 18

FIG. 19

FIG. 20

FIG. 20 (continued)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019178867 A1, LUENGO HENDRIKS CRIS L
- US 20190613 A1
- BE 71030031000